(19) Europäisches Patentamt / European Patent Office / Office européen des brevets

(11) **EP 4 707 036 A1**

(12) **EUROPEAN PATENT APPLICATION**
published in accordance with Art. 153(4) EPC

(43) Date of publication:
**11.03.2026 Bulletin 2026/11**

(21) Application number: **24830131.9**

(22) Date of filing: **29.04.2024**

(51) International Patent Classification (IPC):
**B60L 7/26** *(2006.01)*      **B60L 7/10** *(2006.01)*

(52) Cooperative Patent Classification (CPC):
**B60L 7/10; B60L 7/26**

(86) International application number:
**PCT/CN2024/090532**

(87) International publication number:
**WO 2025/001483 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 CN 202310786830**

(71) Applicant: **Shenzhen Yinwang Intelligent
Technologies Co., Ltd.
Shenzhen, Guangdong 518110 (CN)**

(72) Inventors:
• **LI, Yuhao**
  **Shenzhen, Guangdong 518129 (CN)**
• **SUN, Long**
  **Shenzhen, Guangdong 518129 (CN)**
• **GUO, Zhenhua**
  **Shenzhen, Guangdong 518129 (CN)**
• **LIU, Hanwen**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **BRAKING METHOD AND APPARATUS, AND VEHICLE**

(57)   A braking method and apparatus, and a vehicle are disclosed. The method includes: obtaining a recharge power capability value of a vehicle; determining an electric braking torque of the vehicle as a preset value when the recharge power capability value is less than or equal to a first threshold, and determining a hydraulic braking torque of the vehicle based on a target energy recovery torque and a maximum allowed energy recovery torque of the vehicle; or determining, based on a traveling parameter of the vehicle, the electric braking torque and the hydraulic braking torque when the recharge power capability value is greater than a second threshold; and sending first indication information, where the first indication information includes the hydraulic braking torque, or the first indication information includes the electric braking torque and the hydraulic braking torque. According to the method, whether the vehicle is in an energy recovery limited state can be determined in time and accurately, to bring good driving experience to a user.

500

| S501: Obtain a recharge power capability value of a vehicle |
| --- |

| S502: Determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle; or determine, based on a traveling parameter of the vehicle, the electric braking torque and the hydraulic braking torque when the recharge power capability value is greater than a second threshold |
| --- |

| S503: Send first indication information |
| --- |

FIG. 5

EP 4 707 036 A1

## Description

This application claims priority to Chinese Patent Application No. 202310786830.0, filed with the China National Intellectual Property Administration on June 29, 2023 and entitled "BRAKING METHOD AND APPARATUS, AND VEHICLE", which is incorporated herein by reference in its entirety.

## TECHNICAL FIELD

Embodiments of this application relate to the field of braking technologies, and more specifically, to a braking method and apparatus, and a vehicle.

## BACKGROUND

As electric vehicles are widely used in daily life, users expect that the electric vehicles can bring more comfortable user experience. Currently, for a battery electric vehicle or a hybrid vehicle, a power system of the vehicle may operate as a generator, to convert kinetic energy into electric energy, so that an endurance capability of the vehicle can be improved. Therefore, the vehicle may use an energy recovery strategy during coasting.

However, when the vehicle is in a state like a low battery cell temperature, a high battery level, or a motor overtemperature fault, a battery energy recovery capability of the vehicle is limited. In this case, when the user releases an accelerator pedal so that the vehicle enters a coasting state, the vehicle is insufficiently decelerated due to limited energy recovery of the vehicle. This brings driving experience inconsistent with that of deceleration to the user, and in this case, there is a safety risk.

## SUMMARY

Embodiments of this application provide a braking method and apparatus, and a vehicle, to determine in time whether the vehicle is in an energy recovery limited state, and control the vehicle to brake based on a status of the vehicle, so as to bring good driving experience to a user.

According to a first aspect, a braking method is provided. The method includes: obtaining a recharge power capability value of a vehicle; determining an electric braking torque of the vehicle as a preset value when the recharge power capability value is less than or equal to a first threshold, and determining a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determining, based on a traveling parameter of the vehicle, the electric braking torque and the hydraulic braking torque when the recharge power capability value is greater than a second threshold; and sending first indication information, where the first indication information includes the hydraulic braking torque, or the first indication information includes the electric braking torque and the hydraulic braking torque.

Optionally, the method may be applied to a first control unit. The first control unit may include a vehicle domain controller (vehicle domain controller, VDC) or a vehicle control unit (vehicle control unit, VCU).

Optionally, the first control unit may send the first indication information to a second control unit. The second control unit may include an integrated power brake (integrated power brake, IPB), or an electronic stability control (electronic stability control, ESC).

Optionally, the determining an electric braking torque of the vehicle as a preset value may be understood as setting the electric braking torque of the vehicle during braking to 0 or a small value. Under the preset value, electric braking of the vehicle during braking cannot function. In addition, when the electric braking torque of the vehicle is determined as the preset value, it does not mean that a coasting braking torque of the vehicle in a coasting state is 0. The coasting braking torque of the vehicle may be determined based on the traveling parameter of the vehicle.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

Optionally, when the recharge power capability value is less than or equal to the first threshold, the first indication information sent by the first control unit to the second control unit may include the hydraulic braking torque. When the recharge power capability value is greater than the second threshold, the first indication information sent by the first control unit to the second control unit may include the electric braking torque and the hydraulic braking torque. In this case, the electric braking torque may be a specific value, to be specific, the second control unit may directly perform electric braking based on the electric braking torque. Alternatively, the electric braking torque may be a threshold, to be specific, the second control unit may select a value within a range of the electric braking torque to perform electric braking.

In this embodiment of this application, the first control unit can determine, based on a relationship between the recharge power capability value and the first threshold, whether the vehicle is in an energy recovery limited state. When the vehicle is in the energy recovery limited state, the first control unit can set the electric braking torque to the preset value, and determine the hydraulic braking torque of the vehicle based on the target energy recovery torque and the maximum allowed energy recovery torque of the vehicle. When the vehicle is not in the energy recovery limited state, the first control unit can determine the electric braking torque and the hydraulic braking torque of the vehicle based on the traveling parameter of the vehicle. After determining the electric braking torque and the hydraulic braking torque, the first control unit can send the first indication information to the second control unit, to implement braking of the vehicle. In this manner, whether the vehicle is in the energy recovery limited state can be determined in time, and the vehicle is controlled to brake based on a status of the vehicle, to bring good driving experience to a user.

With reference to the first aspect, in some implementations of the first aspect, the determining an electric braking torque of the vehicle as a preset value when the recharge power capability value is less than or equal to a first threshold includes: controlling a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

Optionally, the controlling a type-B electric regenerative braking system to be turned off may include: controlling a braking energy recovery capability value of the type-B electric regenerative braking system to be the preset value.

In this embodiment of this application, when the vehicle is in the energy recovery limited state, the type-B regenerative braking system can be controlled to be in a non-operative state. Then, when the vehicle performs hydraulic braking, the type-B regenerative braking system does not participate in energy recovery, to avoid impact on a chassis braking system. In this manner, the vehicle can maintain stability of the chassis braking system in the energy recovery limited state, to provide more reliable braking performance for a driver.

With reference to the first aspect, in some implementations of the first aspect, the method further includes: obtaining the traveling parameter of the vehicle, where the traveling parameter includes one or more of the traveling speed, an acceleration, and a brake pedal opening.

With reference to the first aspect, in some implementations of the first aspect, the determining, based on a traveling parameter, the electric braking torque and the hydraulic braking torque includes: controlling a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

In this embodiment of this application, when the vehicle is not in the energy recovery limited state, the type-B regenerative braking system can be controlled to be in an operative state. Then, the type-B regenerative braking system can adjust the distribution ratio of the electric braking torque to the hydraulic braking torque of the vehicle based on the traveling parameter of the vehicle. In this manner, energy recovery of the vehicle can be optimized, braking performance of the vehicle can be improved, and stability of a braking system can be improved, to provide safer, more comfortable, and more efficient driving experience for a driver.

With reference to the first aspect, in some implementations of the first aspect, before the obtaining a recharge power capability value of a vehicle, the method includes: determining that the vehicle is in a non-one-pedal driving mode.

Alternatively, the foregoing implementation may be replaced with determining that the vehicle is in a two-pedal driving mode.

In this embodiment of this application, when it is detected that the vehicle is in the non-one-pedal driving mode, it can be determined, based on the relationship between the recharge power capability value and the first threshold, whether the vehicle is in the energy recovery limited state. This brings more efficient, safer, and more comfortable driving experience to the user.

With reference to the first aspect, in some implementations of the first aspect, the determining that the vehicle is in a non-one-pedal driving mode includes: detecting a first input of the user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

According to a second aspect, a braking method is provided. The method includes: receiving first indication information, where the first indication information includes a hydraulic braking torque, or the first indication information includes an electric braking torque and the hydraulic braking torque; and performing braking based on the hydraulic braking torque, or performing braking based on the electric braking torque and the hydraulic braking torque.

Optionally, the method may be applied to a second control unit.

Optionally, the first indication information may be sent by a first control unit.

In this embodiment of this application, the second control unit can implement braking control on the vehicle based on the hydraulic braking torque or the hydraulic braking torque and the electric braking torque that are determined by the first control unit. According to this cooperative control strategy, stability and controllability of a braking force of the vehicle can be ensured. This provides more comfortable and safer driving experience for a user.

According to a third aspect, a braking method is provided. The method includes: obtaining a recharge power capability value of a vehicle; determining an electric braking torque of the vehicle as a preset value when the recharge power capability value is less than or equal to a first threshold, and determining a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determining, based on a traveling parameter of the vehicle, the electric braking torque and the hydraulic braking torque when the recharge power capability value is greater than a second threshold; and performing braking based on the electric braking torque and the hydraulic braking torque.

Optionally, the method may be applied to a second control unit.

Optionally, a manner in which the second control unit obtains the recharge power capability value may be that the second control unit computes the recharge power capability value based on a battery parameter and a motor parameter of the vehicle, or a first control unit sends the recharge power capability value to the second control unit.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

In this embodiment of this application, the second control unit can determine, based on a relationship between the recharge power capability value and the first threshold, whether the vehicle is in an energy recovery limited state. When the vehicle is in the energy recovery limited state, the second control unit can set the electric braking torque to the preset value, and determine the hydraulic braking torque of the vehicle based on the target energy recovery torque and the maximum allowed energy recovery torque of the vehicle. When the vehicle is not in the energy recovery limited state, the second control unit can determine the electric braking torque and the hydraulic braking torque of the vehicle based on the traveling parameter of the vehicle. After determining the electric braking torque and the hydraulic braking torque, the second control unit can implement braking of the vehicle. In this manner, whether the vehicle is in the energy recovery limited state can be determined in time, and the vehicle is controlled to brake based on a status of the vehicle, to bring good driving experience to a user.

With reference to the third aspect, in some implementations of the third aspect, the determining an electric braking torque of the vehicle as a preset value when the recharge power capability value is less than or equal to a first threshold includes: controlling a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

Optionally, the controlling a type-B electric regenerative braking system to be turned off may include: controlling a braking energy recovery capability value of the type-B electric regenerative braking system to be the preset value.

In this embodiment of this application, when the vehicle is in the energy recovery limited state, the type-B regenerative braking system can be controlled to be in a non-operative state. Then, when the vehicle performs hydraulic braking, the type-B regenerative braking system does not participate in energy recovery, to avoid impact on a chassis braking system. In this manner, the vehicle can maintain stability of the chassis braking system in the energy recovery limited state, to provide more reliable braking performance for a driver.

With reference to the third aspect, in some implementations of the third aspect, the method further includes: obtaining the traveling parameter of the vehicle, where the traveling parameter includes one or more of the traveling speed, an acceleration, and a brake pedal opening.

With reference to the third aspect, in some implementations of the third aspect, the determining, based on a traveling parameter, the electric braking torque and the hydraulic braking torque includes: controlling a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

In this embodiment of this application, when the vehicle is not in the energy recovery limited state, the type-B regenerative braking system can be controlled to be in an operative state. Then, the type-B regenerative braking system can adjust the distribution ratio of the electric braking torque to the hydraulic braking torque of the vehicle based on the traveling parameter of the vehicle. In this manner, energy recovery of the vehicle can be optimized, braking performance of the vehicle can be improved, and stability of a braking system can be improved, to provide safer, more comfortable, and more efficient driving experience for a driver.

With reference to the third aspect, in some implementations of the third aspect, before the obtaining a recharge power capability value of a vehicle, the method includes: determining that the vehicle is in a non-one-pedal driving mode.

Alternatively, the foregoing implementation may be replaced with determining that the vehicle is in a two-pedal driving mode.

In this embodiment of this application, when it is detected that the vehicle is in the non-one-pedal driving mode, it can be determined, based on the relationship between the recharge power capability value and the first threshold, whether the vehicle is in the energy recovery limited state. This brings more efficient, safer, and more comfortable driving experience to the user.

With reference to the third aspect, in some implementations of the third aspect, the determining that the vehicle is in a non-one-pedal driving mode includes: detecting a first input of the user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

According to a fourth aspect, a braking apparatus is provided. The apparatus includes: an obtaining unit, configured to obtain a recharge power capability value of a vehicle; a processing unit, configured to: determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determine, based on a traveling parameter of the vehicle, the electric braking torque and the hydraulic braking torque when the recharge power capability value is greater than a second threshold; and a transceiver unit, configured to send first indication information, where the first indication information includes the hydraulic braking torque, or the first indication information includes the electric braking torque and the hydraulic braking torque.

With reference to the fourth aspect, in some implementations of the fourth aspect, the processing unit is specifically configured to control a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

With reference to the fourth aspect, in some implementations of the fourth aspect, the obtaining unit is further configured to obtain the traveling parameter of the vehicle, where the traveling parameter includes one or more of the traveling speed, an acceleration, and a brake pedal opening.

With reference to the fourth aspect, in some implementations of the fourth aspect, the processing unit is specifically configured to control the type-B electric regenerative braking system to be turned on, where the type-B electric regenerative braking system is located in the vehicle, and the type-B electric regenerative braking system is configured to adjust the distribution ratio of the electric braking torque to the hydraulic braking torque of the vehicle.

With reference to the fourth aspect, in some implementations of the fourth aspect, the processing unit is further configured to determine that the vehicle is in a non-one-pedal driving mode.

With reference to the fourth aspect, in some implementations of the fourth aspect, the processing unit is specifically configured to: detect a first input of the user for the vehicle; and in response to the first input, disable a one-pedal driving mode of the vehicle.

According to a fifth aspect, a braking apparatus is provided. The apparatus includes: a transceiver unit, configured to receive first indication information, where the first indication information includes a hydraulic braking torque, or the first indication information includes an electric braking torque and the hydraulic braking torque; and a processing unit, configured to perform braking based on the hydraulic braking torque, or perform braking based on the electric braking torque and the hydraulic braking torque.

According to a sixth aspect, a braking apparatus is provided. The apparatus includes: an obtaining unit, configured to obtain a recharge power capability value of a vehicle; and a processing unit, configured to: determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determine, based on a traveling parameter of the vehicle, the electric braking torque and the hydraulic braking torque when the recharge power capability value is greater than a second threshold; and perform braking based on the electric braking torque and the hydraulic braking torque.

With reference to the sixth aspect, in some implementations of the sixth aspect, the apparatus includes: the obtaining unit, configured to obtain the recharge power capability value of the vehicle; and the processing unit, configured to: determine the electric braking torque of the vehicle as the preset value when the recharge power capability value is less than or equal to the first threshold, and determine the hydraulic braking torque of the vehicle based on the target energy recovery torque and the maximum allowed energy recovery torque of the vehicle, where the target energy recovery torque is determined based on the traveling speed and/or the accelerator pedal opening of the vehicle, and the maximum allowed energy recovery torque is determined based on a recharge torque capability value of a battery management system of the vehicle and a recharge torque capability value of a motor; or determine, based on the traveling parameter of the vehicle, the electric braking torque and the hydraulic braking torque when the recharge power capability value is greater than a second threshold; and perform braking based on the electric braking torque and the hydraulic braking torque.

With reference to the sixth aspect, in some implementations of the sixth aspect, the processing unit is specifically configured to control a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

With reference to the sixth aspect, in some implementations of the sixth aspect, the obtaining unit is further configured to obtain the traveling parameter of the vehicle, where the traveling parameter includes one or more of the traveling speed, an acceleration, and a brake pedal opening.

With reference to the sixth aspect, in some implementations of the sixth aspect, the processing unit is specifically configured to control a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

With reference to the sixth aspect, in some implementations of the sixth aspect, the processing unit is further configured to determine that the vehicle is in a non-one-pedal driving mode.

With reference to the sixth aspect, in some implementations of the sixth aspect, the processing unit is specifically configured to: detect a first input of the user for the vehicle; and in response to the first input, disable a one-pedal driving mode of the vehicle.

According to a seventh aspect, a braking apparatus is provided, including at least one processor and a memory. The at least one processor is coupled to the memory, and is configured to read and execute instructions in the memory, to enable the apparatus to implement the method according to any one of the implementations of the first aspect to the third aspect.

According to an eighth aspect, a computer-readable storage medium is provided. The computer-readable storage medium stores program code. When the computer program code is run on a computer, the computer is enabled to perform the method according to any one of the implementations of the first aspect to the third aspect.

According to a ninth aspect, a chip is provided. The chip includes a circuit. The circuit is configured to perform the method according to any one of the implementations the first aspect to the third aspect.

According to a tenth aspect, a computer program product is provided. The computer product includes a computer program. When the computer program is run, a computer is enabled to perform the method according to any one of the implementations of the first aspect to the third aspect.

According to an eleventh aspect, a vehicle is provided, including the braking apparatus according to any one of the implementations of the fourth aspect to the sixth aspect.

According to a twelfth aspect, a braking method is provided. The method includes: obtaining a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; determining, based on the target energy recovery torque and the maximum allowed energy recovery torque, a hydraulic braking torque of the vehicle when the maximum allowed energy recovery torque is less than the target energy recovery torque, or determining, based on a traveling parameter of the vehicle, an electric braking torque and the hydraulic braking torque when the maximum allowed energy recovery torque is greater than or equal to the target energy recovery torque; and sending first indication information, where the first indication information includes the hydraulic braking torque, or the first indication information includes the electric braking torque and the hydraulic braking torque.

In a possible implementation, before the determining, based on the target energy recovery torque and the maximum allowed energy recovery torque, a hydraulic braking torque of the vehicle, the method includes: determining the electric braking torque or an electric braking power as a preset value.

Optionally, a first control unit may send the first indication information to a second control unit. The second control unit may include: an IPB or an ESC.

In a possible implementation, before the determining, based on the target energy recovery torque and the maximum allowed energy recovery torque, a hydraulic braking torque of the vehicle, the method includes: determining the electric braking torque or the electric braking power as the preset value.

Optionally, the determining the electric braking torque or an electric braking power of the vehicle as a preset value may be understood as setting the electric braking torque or the electric braking power of the vehicle during braking to any value.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

Optionally, when the maximum allowed energy recovery torque is less than the target energy recovery torque, the first indication information sent by the first control unit to the second control unit may include the hydraulic braking torque. When the maximum allowed energy recovery torque is greater than or equal to the target energy recovery torque, the first indication information sent by the first control unit to the second control unit may include the electric braking torque and the hydraulic braking torque. In this case, the electric braking torque may be a specific value, to be specific, the second control unit may directly perform electric braking based on the electric braking torque. Alternatively, the electric braking torque may be a threshold, to be specific, the second control unit may select a value within a range of the electric braking torque to perform electric braking.

In this embodiment of this application, the first control unit can determine, based on a relationship between the target energy recovery torque and the maximum allowed energy recovery torque, whether the vehicle is in an energy recovery limited state. When the vehicle is in the energy recovery limited state, the first control unit can determine the hydraulic braking torque of the vehicle based on the target energy recovery torque and the maximum allowed energy recovery torque of the vehicle. When the vehicle is not in the energy recovery limited state, the first control unit can determine the electric braking torque and the hydraulic braking torque of the vehicle based on the traveling parameter of the vehicle. After determining the electric braking torque and the hydraulic braking torque, the first control unit can send the first indication information to the second control unit, to implement braking of the vehicle. In this manner, whether the vehicle is in the energy recovery limited state can be determined in time, and the vehicle is controlled to brake based on a status of the vehicle, to bring good driving experience to a user.

With reference to the twelfth aspect, in some implementations of the twelfth aspect, before the determining, based on the target energy recovery torque and the maximum allowed energy recovery torque of the vehicle, a hydraulic braking torque of the vehicle, the method further includes: controlling an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle.

Optionally, the controlling an electric braking capability of a type-B electric regenerative braking system to be disabled may include: controlling a braking energy recovery capability value of the type-B electric regenerative braking system to be the preset value.

In this embodiment of this application, when the vehicle is in the energy recovery limited state, the electric braking capability of the type-B regenerative braking system can be controlled to be in a non-functioning state. Then, when the vehicle performs hydraulic braking, the type-B regenerative braking system does not participate in energy recovery, to avoid impact on a chassis braking system. In this manner, the vehicle can maintain stability of the chassis braking system in the energy recovery limited state, to provide more reliable braking performance for a driver.

With reference to the twelfth aspect, in some implementations of the twelfth aspect, the method further includes: obtaining the traveling parameter of the vehicle, where the traveling parameter includes one or more of the traveling speed, an acceleration, and a brake pedal opening.

With reference to the twelfth aspect, in some implementations of the twelfth aspect, the determining, based on a traveling parameter, an electric braking torque and the hydraulic braking torque includes: controlling an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

In this embodiment of this application, when the vehicle is not in the energy recovery limited state, the electric braking capability of the type-B regenerative braking system can be controlled to be in a functioning state. Then, the type-B regenerative braking system can adjust the distribution ratio of the electric braking torque to the hydraulic braking torque of the vehicle based on the traveling parameter of the vehicle. In this manner, energy recovery of the vehicle can be optimized, braking performance of the vehicle can be improved, and stability of a braking system can be improved, to provide safer, more comfortable, and more efficient driving experience for a driver.

With reference to the twelfth aspect, in some implementations of the twelfth aspect, before the obtaining a target energy recovery torque and a maximum allowed energy recovery torque of a vehicle, the method further includes: determining that the vehicle is in a non-one-pedal driving mode.

Alternatively, the foregoing implementation may be replaced with determining that the vehicle is in a two-pedal driving mode.

In this embodiment of this application, when it is detected that the vehicle is in the non-one-pedal driving mode, it can be determined, based on the relationship between the target energy recovery torque and the maximum allowed energy recovery torque, whether the vehicle is in the energy recovery limited state. This brings more efficient, safer, and more comfortable driving experience to the user.

With reference to the twelfth aspect, in some implementations of the twelfth aspect, the determining that the vehicle is in a non-one-pedal driving mode includes: detecting a first input of the user for the vehicle; and in response to the first input, disabling a one-pedal driving mode of the vehicle.

According to a thirteenth aspect, a braking method is provided. The method includes: receiving first indication information, where the first indication information includes a hydraulic braking torque, or the first indication information includes an electric braking torque and the hydraulic braking torque; and performing braking based on the hydraulic braking torque, or performing braking based on the electric braking torque and the hydraulic braking torque.

Optionally, the method may be applied to a second control unit.

Optionally, the first indication information may be sent by a first control unit.

In this embodiment of this application, the second control unit can implement braking control on the vehicle based on the hydraulic braking torque or the hydraulic braking torque and the electric braking torque that are determined by the first control unit. According to this cooperative control strategy, stability and controllability of a braking force of the vehicle can be ensured. This provides more comfortable and safer driving experience for a user.

According to a fourteenth aspect, a braking method is provided. The method includes: obtaining a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; determining, based on the target energy recovery torque and the maximum allowed energy recovery torque, a hydraulic braking torque of the vehicle when the maximum allowed energy recovery torque is less than the target energy recovery torque, or determining, based on a traveling parameter of the vehicle, an electric braking torque and the hydraulic braking torque when the maximum allowed energy recovery torque is greater than or equal to the target energy recovery torque; and performing braking based on the electric braking torque and the hydraulic braking torque.

Optionally, the method may be applied to a second control unit.

Optionally, a manner in which the second control unit obtains the target energy recovery torque and the maximum allowed energy recovery torque may be that the second control unit computes the target energy recovery torque and the maximum allowed energy recovery torque based on a battery parameter and a motor parameter of the vehicle, or a first control unit sends the target energy recovery torque and the maximum allowed energy recovery torque to the second control unit.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

In this embodiment of this application, the second control unit can determine, based on a relationship between the target energy recovery torque and the maximum allowed energy recovery torque, whether the vehicle is in an energy recovery limited state. When the vehicle is in the energy recovery limited state, the second control unit can determine the hydraulic braking torque of the vehicle based on the target energy recovery torque and the maximum allowed energy recovery torque of the vehicle. When the vehicle is not in the energy recovery limited state, the second control unit can determine the electric braking torque and the hydraulic braking torque of the vehicle based on the traveling parameter of the vehicle. After determining the electric braking torque and the hydraulic braking torque, the second control unit can implement braking of the vehicle. In this manner, whether the vehicle is in the energy recovery limited state can be determined in time, and the vehicle is controlled to brake based on a status of the vehicle, to bring good driving experience to a user.

With reference to the fourteenth aspect, in some implementations of the fourteenth aspect, before the determining, based on the target energy recovery torque and the maximum allowed energy recovery torque of the vehicle, a hydraulic braking torque of the vehicle, the method further includes: controlling an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle.

Optionally, the controlling an electric braking capability of a type-B electric regenerative braking system to be disabled may include: controlling a braking energy recovery capability value of the type-B electric regenerative braking system to be the preset value.

In this embodiment of this application, when the vehicle is in the energy recovery limited state, the electric braking capability of the type-B regenerative braking system can be controlled to be in a non-functioning state. Then, when the vehicle performs hydraulic braking, the type-B regenerative braking system does not participate in energy recovery, to avoid impact on a chassis braking system. In this manner, the vehicle can maintain stability of the chassis braking system in the energy recovery limited state, to provide more reliable braking performance for a driver.

With reference to the fourteenth aspect, in some implementations of the fourteenth aspect, the method further includes: obtaining the traveling parameter of the vehicle, where the traveling parameter includes one or more of the traveling speed, an acceleration, and a brake pedal opening.

With reference to the fourteenth aspect, in some implementations of the fourteenth aspect, the determining, based on a traveling parameter, an electric braking torque and the hydraulic braking torque includes: controlling the electric braking capability of a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

In this embodiment of this application, when the vehicle is not in the energy recovery limited state, the electric braking capability of the type-B regenerative braking system can be controlled to be in a functioning state. Then, the type-B regenerative braking system can adjust the distribution ratio of the electric braking torque to the hydraulic braking torque of the vehicle based on the traveling parameter of the vehicle. In this manner, energy recovery of the vehicle can be optimized, braking performance of the vehicle can be improved, and stability of a braking system can be improved, to provide safer, more comfortable, and more efficient driving experience for a driver.

With reference to the fourteenth aspect, in some implementations of the fourteenth aspect, before the obtaining a target energy recovery torque and a maximum allowed energy recovery torque of a vehicle, the method further includes: determining that the vehicle is in a non-one-pedal driving mode.

Alternatively, the foregoing implementation may be replaced with determining that the vehicle is in a two-pedal driving mode.

In this embodiment of this application, when it is detected that the vehicle is in the non-one-pedal driving mode, it can be determined, based on the relationship between the target energy recovery torque and the maximum allowed energy recovery torque, whether the vehicle is in the energy recovery limited state. This brings more efficient, safer, and more comfortable driving experience to the user.

With reference to the fourteenth aspect, in some implementations of the fourteenth aspect, the determining that the vehicle is in a non-one-pedal driving mode includes: detecting a first input of the user for the vehicle; and in response to the first input, disabling a one-pedal driving mode of the vehicle.

According to a fifteenth aspect, a braking apparatus is provided. The apparatus includes: an obtaining unit, configured to obtain a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; a processing unit, configured to: determine, based on the target energy recovery torque and the maximum allowed energy recovery torque, a hydraulic braking torque of the vehicle when the maximum allowed energy recovery torque is less than the target energy recovery torque, or determine, based on a traveling parameter of the vehicle, an electric braking torque and the hydraulic braking torque when the maximum allowed energy recovery torque is greater than or equal to the target energy recovery torque; and a transceiver unit, configured to send first indication information, where the first indication information includes the hydraulic braking torque, or the first indication information includes the electric braking torque and the hydraulic braking torque.

With reference to the fifteenth aspect, in some implementations of the fifteenth aspect, the processing unit is further configured to control an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle.

With reference to the fifteenth aspect, in some implementations of the fifteenth aspect, the obtaining unit is further configured to obtain the traveling parameter of the vehicle, where the traveling parameter includes one or more of the traveling speed, an acceleration, and a brake pedal opening.

With reference to the fifteenth aspect, in some implementations of the fifteenth aspect, the processing unit is specifically configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

With reference to the fifteenth aspect, in some implementations of the fifteenth aspect, the processing unit is further configured to determine that the vehicle is in a non-one-pedal driving mode.

With reference to the fifteenth aspect, in some implementations of the fifteenth aspect, the processing unit is specifically configured to: detect a first input of the user for the vehicle; and in response to the first input, disable a one-pedal driving mode of the vehicle.

According to a sixteenth aspect, a braking apparatus is provided. The apparatus includes: a transceiver unit, configured to receive first indication information, where the first indication information includes a hydraulic braking torque, or the first indication information includes an electric braking torque and the hydraulic braking torque; and a processing unit, configured to perform braking based on the hydraulic braking torque, or perform braking based on the electric braking torque and the hydraulic braking torque.

According to a seventeenth aspect, a braking apparatus is provided. The apparatus includes: an obtaining unit, configured to obtain a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; and a processing unit, configured to: determine, based on the target energy recovery torque and the maximum allowed energy recovery torque, a hydraulic braking torque of the vehicle when the maximum allowed energy recovery torque is less than the target energy recovery torque, or determine, based on a traveling parameter of the vehicle, an electric braking torque and the hydraulic braking torque when the maximum allowed energy recovery torque is greater than or equal to the target energy recovery torque; and perform braking based on the electric braking torque and the hydraulic braking torque.

With reference to the seventeenth aspect, in some implementations of the seventeenth aspect, the processing unit is further configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

With reference to the seventeenth aspect, in some implementations of the seventeenth aspect, the obtaining unit is further configured to obtain the traveling parameter of the vehicle, where the traveling parameter includes one or more of the traveling speed, an acceleration, and a brake pedal opening.

With reference to the seventeenth aspect, in some implementations of the seventeenth aspect, the processing unit is specifically configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

With reference to the seventeenth aspect, in some implementations of the seventeenth aspect, the processing unit is further configured to determine that the vehicle is in a non-one-pedal driving mode.

With reference to the seventeenth aspect, in some implementations of the seventeenth aspect, the processing unit is specifically configured to: detect a first input of the user for the vehicle; and in response to the first input, disable a one-pedal driving mode of the vehicle.

According to an eighteenth aspect, a braking apparatus is provided, including at least one processor and a memory. The at least one processor is coupled to the memory, and is configured to read and execute instructions in the memory, to enable the apparatus to implement the method according to any one of the implementations of the twelfth aspect to the fourteenth aspect.

According to a nineteenth aspect, a computer-readable storage medium is provided. The computer-readable storage medium stores program code. When the computer program code is run on a computer, the computer is enabled to perform the method according to any one of the implementations of the twelfth aspect to the fourteenth aspect.

According to a twentieth aspect, a chip is provided. The chip includes a circuit. The circuit is configured to perform the method according to any one of the implementations the twelfth aspect to the fourteenth aspect.

According to a twenty-first aspect, a computer program product is provided. The computer product includes a computer program. When the computer program is run, a computer is enabled to perform the method according to any one of the implementations of the twelfth aspect to the fourteenth aspect.

According to a twenty-second aspect, a vehicle is provided, including the braking apparatus in any one of the implementations of the fifteenth aspect to the eighteenth aspect.

## BRIEF DESCRIPTION OF DRAWINGS

FIG. 1 is a functional diagram of a vehicle according to an embodiment of this application;

FIG. 2 shows a hydraulic braking compensation architecture of a vehicle in a one-pedal driving mode according to an embodiment of this application;

FIG. 3 shows a system architecture to which a braking method is applicable according to an embodiment of this application;

FIG. 4 shows another system architecture to which a braking method is applicable according to an embodiment of this application;

FIG. 5 is a schematic flowchart of a braking method according to an embodiment of this application;

FIG. 6 is a schematic flowchart of a braking method according to an embodiment of this application;

FIG. 7A and FIG. 7B are a schematic flowchart of another braking method according to an embodiment of this application;

FIG. 8 is a schematic flowchart of another braking method according to an embodiment of this application;

FIG. 9(a)-1 to FIG. 9(e) are a diagram of an application scenario of a braking method according to an embodiment of this application;

FIG. 10 is a diagram of a braking apparatus according to an embodiment of this application;

FIG. 11 is a diagram of another braking apparatus according to an embodiment of this application;

FIG. 12 is a schematic flowchart of another braking method according to an embodiment of this application;

FIG. 13 is a schematic flowchart of another braking method according to an embodiment of this application;

FIG. 14 is a diagram of another braking apparatus according to an embodiment of this application; and

FIG. 15 is a diagram of another braking apparatus according to an embodiment of this application.

## DESCRIPTION OF EMBODIMENTS

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Prefix words such as "first" and "second" in embodiments of this application are merely intended to distinguish between different described objects, and impose no limitation on locations, rankings, priorities, quantities, content, or the like of the described objects. In embodiments of this application, use of the prefix words used to distinguish between the described objects, for example, ordinal numbers, constitutes no limitation on the described objects. For descriptions of the described object, refer to context descriptions in claims or embodiments. Use of the prefix words should constitute no redundant limitation.

The following describes the technical solutions in embodiments of this application with reference to the accompanying drawings.

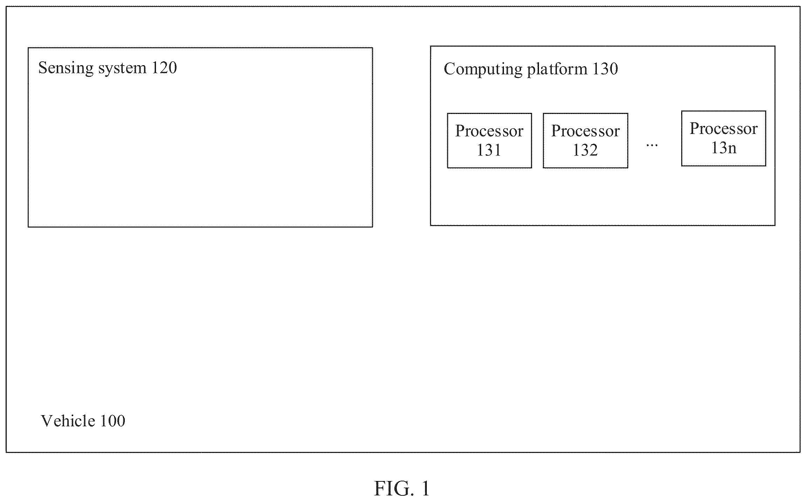

FIG. 1 is a functional diagram of a vehicle 100 according to an embodiment of this application.

The vehicle 100 may include a plurality of subsystems, for example, a sensing system 120 and a computing platform 130. Optionally, the vehicle 100 may include more or fewer subsystems, and each subsystem may include one or more components. In addition, all the subsystems and components of the vehicle 100 may be interconnected in a wired or wireless manner.

The sensing system 120 may include several types of sensors that are configured to sense information about an environment around the vehicle 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

A part or all of functions of the vehicle 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. A part or all of the processors 131 to 13n may invoke the instructions in the memory, to implement a corresponding function.

The computing platform 130 may control the functions of the vehicle 100 based on inputs received from the subsystems (for example, the sensing system 120). In some embodiments, the computing platform 130 may be configured to control many aspects of the vehicle 100 and the subsystems of the vehicle.

Optionally, the foregoing components are merely examples. During actual application, the components in the foregoing modules may be added or deleted based on an actual requirement.

The vehicle 100 in this application may include a road transport means, an industrial device, an agricultural device, an entertainment device, or the like. For example, the vehicle is a vehicle in a broad sense, and may be a transport means (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application.

The following uses an example in which the vehicle 100 is an electric vehicle to describe a technical problem that needs to be resolved in this application and the technical solutions used in this application.

As electric vehicles are widely used in daily life, users expect that the electric vehicles can bring more comfortable user experience. Currently, for a battery electric vehicle or a hybrid vehicle, a power system of the vehicle may operate as a generator, to convert kinetic energy into electric energy, so that an endurance capability of the vehicle can be improved. Therefore, the vehicle may use an energy recovery strategy during coasting. According to the energy recovery strategy, the electric vehicle can furthest use energy generated during deceleration or coasting, to prolong a range of a battery, and improve overall energy efficiency.

However, when the vehicle is in a state like a low battery cell temperature, a high battery level, or a motor overtemperature fault, a battery energy recovery capability of the vehicle is limited. In this case, when the user releases an accelerator pedal so that the vehicle enters a coasting state, the vehicle is insufficiently decelerated due to limited energy recovery of the vehicle. This brings driving experience inconsistent with that of deceleration to the user, and in this case, there is a safety risk.

In an energy recovery limited scenario, the vehicle may make up for a shortage of an electric braking capability through hydraulic braking, to simulate a deceleration state of the vehicle in a normal energy recovery state. However, for a vehicle equipped with a type-B electric regenerative braking system, when a vehicle chassis responds to a hydraulic braking compensation request of a VDC or a VCU, an electric-hydraulic decision of the type-B electric regenerative braking system is affected, that is, it is difficult for the type-B electric regenerative braking system to determine a distribution ratio of the electric braking to the hydraulic braking, thereby affecting stability of a chassis braking system.

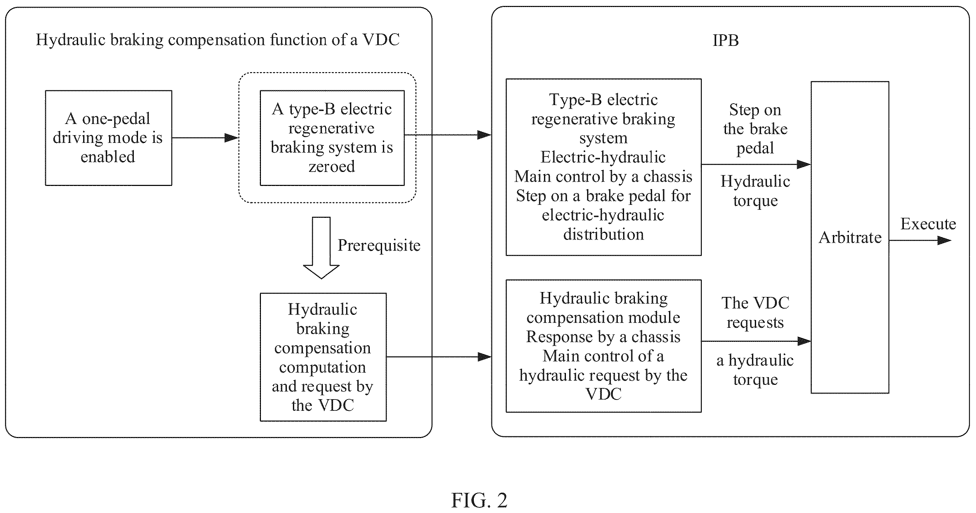

For example, in a system architecture shown in FIG. 2, in a one-pedal driving mode, when the battery energy recovery capability of the vehicle is limited, the VDC may send the hydraulic braking compensation request to an IPB. In this case, if the type-B electric regenerative braking system is not zeroed, it may be difficult for the type-B electric regenerative braking system to determine the distribution ratio of electric braking to hydraulic braking of the vehicle, and the vehicle cannot perform hydraulic braking based on the hydraulic braking compensation request either, affecting stability of the entire IPB.

Embodiments of this application provide a braking method and apparatus, and a vehicle, to determine in time whether the vehicle is in an energy recovery limited state, and control the vehicle to brake based on a status of the vehicle, so as to bring good driving experience to a user.

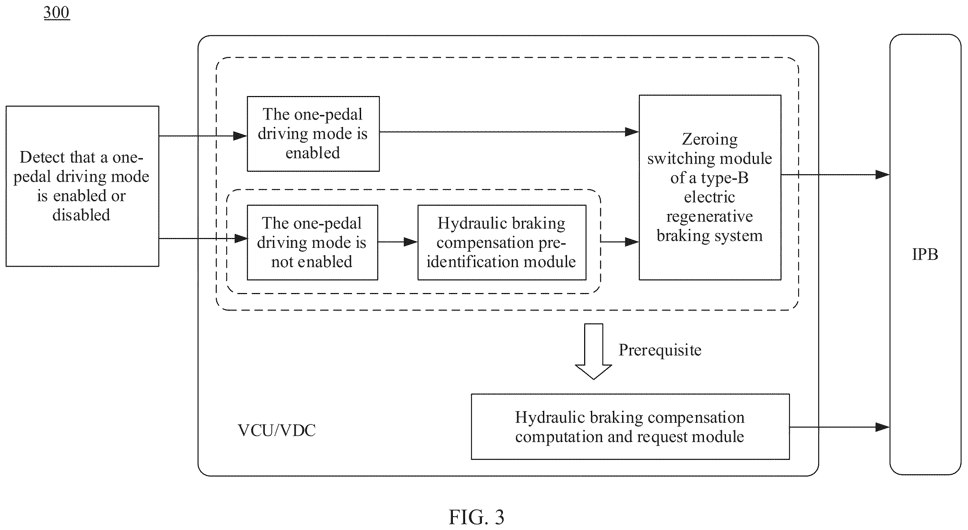

FIG. 3 shows a system architecture to which a braking method is applicable according to an embodiment of this application. The system architecture may be used in the vehicle 100.

As shown in FIG. 3, in a one-pedal driving mode, a VDC or a VCU may limit a braking energy recovery capability value of a type-B electric regenerative braking system to a preset value (for example, set to 0) based on an activation signal of the one-pedal driving mode, and then determine, by determining whether an energy recovery torque of the vehicle is limited, whether to send a requested hydraulic torque to an IPB. In a non-single-board driving mode, a hydraulic braking compensation pre-identification module may be added to the VDC or the VCU to pre-identify whether the vehicle is currently in a capability limited scenario, to determine whether to limit the braking energy recovery capability value of the type-B electric regenerative braking system. Optionally, the hydraulic braking compensation pre-identification module may exist in a form of software.

Specifically, the architecture 300 may include a hydraulic braking compensation pre-identification module, a zeroing switching module of the type-B electric regenerative braking system, and a hydraulic braking compensation computation and request module.

The hydraulic braking compensation pre-identification module may obtain a vehicle recharge power capability value through computation based on status information of the vehicle (for example, information such as a cell temperature of a battery management system (battery management system, BMS), whether a motor has an overtemperature fault, and a motor derating fault), to determine, based on the vehicle recharge power capability value, whether the vehicle is currently in an energy recovery limited scenario. This helps the VDC or the VCU respond to an action in advance.

The zeroing switching module of the type-B electric regenerative braking system may determine, based on an activation status of a signal sent by the hydraulic braking compensation pre-identification module, whether to correspondingly limit the braking energy recovery capability value of the type-B electric regenerative braking system. For example, if the signal sent by the hydraulic braking compensation pre-identification module indicates activation, the zeroing switching module of the type-B electric regenerative braking system may limit the braking energy recovery capability value to the preset value (for example, the preset value is 0). If the signal sent by the hydraulic braking compensation pre-identification module indicates inactivation, the zeroing switching module of the type-B electric regenerative braking system may not limit the braking energy recovery capability value of the type-B electric regenerative braking system.

The hydraulic braking compensation computation and request module may compute a hydraulic torque in the one-pedal driving mode or the non-one-pedal driving mode. After the hydraulic torque is obtained through computation, the hydraulic braking compensation computation and request module may send the requested hydraulic torque to the IPB, and the IPB responds.

After receiving the requested hydraulic torque, the IPB may determine whether to perform the hydraulic torque requested by the hydraulic braking compensation computation and request module.

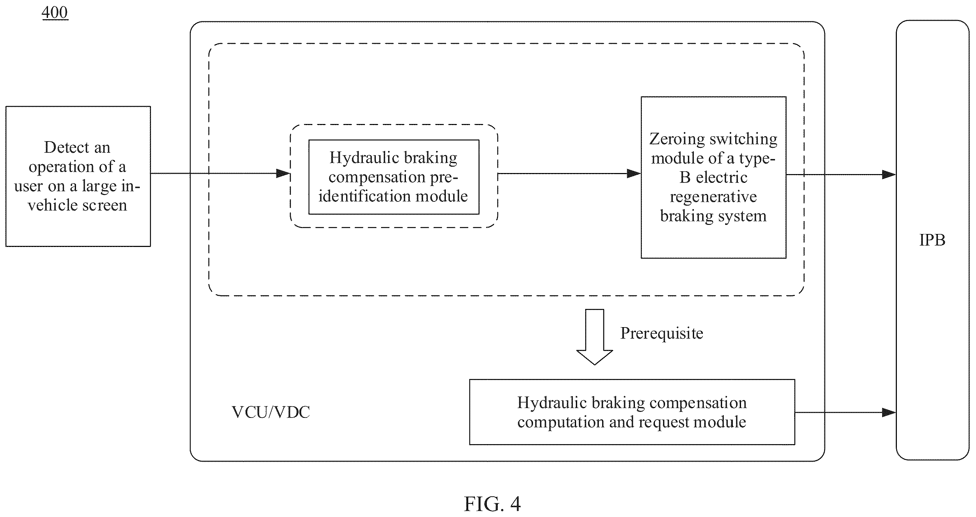

FIG. 4 shows another system architecture to which a braking method is applicable according to an embodiment of this application. The system architecture may be used in the vehicle 100.

As shown in FIG. 4, a difference between the architecture 400 and the architecture 300 lies in that the VDC or the VCU does not need to determine whether the vehicle enables the one-pedal driving mode. To be specific, after detecting an operation of a user on a large in-vehicle screen, the VDC or the VCU may directly determine, based on the hydraulic braking compensation pre-identification module, that the vehicle is currently in the capability limited scenario, to determine whether to limit the braking energy recovery capability value of the type-B electric regenerative braking system. Functions of modules included in the architecture 400 are described in detail in the architecture 300. Details are not described herein again.

It should be understood that any component that can adjust a distribution ratio of electric braking to hydraulic braking of the vehicle belongs to the type-B electric regenerative braking system in this application. The type-B electric regenerative braking system may be an electric regeneration braking system belonging to a traveling braking system, and may stop the vehicle. A difference between the type-B electric regenerative braking system and a type-A electric regenerative braking system lies in that the type-A electric regenerative braking system does not belong to the electric regenerative braking system of the traveling braking system, and cannot stop the vehicle. The traveling braking system may be that, regardless of a vehicle speed, a load, or vehicle upgrading or downgrading, the traveling braking system can control traveling of the vehicle, so that the vehicle can be safely, quickly, and effectively stopped.

It should be further understood that, in embodiments of this application, energy recovery of the vehicle may be that mechanical energy is converted into electric energy and charged into a battery, and the vehicle decelerates. Energy recovery may be classified into coasting energy recovery occurring when the user does not step on a brake pedal and braking energy recovery occurring when the user steps on the brake pedal. For example, when the user does not step on the brake pedal after releasing an accelerator pedal, only coasting energy recovery is performed. When the user steps on the brake pedal after releasing the accelerator pedal, total energy recovery includes a sum of coasting energy recovery and braking energy recovery.

It should be further understood that, in embodiments of this application, electric braking and regenerative braking may be a same concept, to be specific, both may mean that the mechanical energy of the vehicle is converted into the electrical energy, and the vehicle decelerates. However, a conceptual scope of energy recovery may be wider than that of electric braking and that of regenerative braking, that is, energy recovery may further include recovery of other energy in addition to the mechanical energy. The other energy may include, for example, thermal energy and kinetic energy.

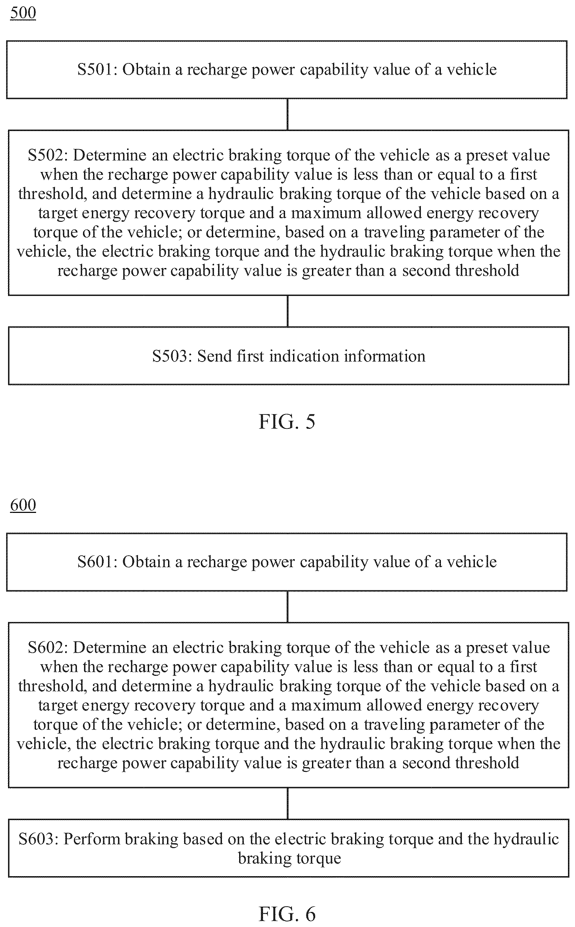

FIG. 5 is a schematic flowchart of a braking method according to an embodiment of this application. An execution body of the method 500 may be a vehicle, or may be a control unit. When the execution body of the method 500 is the vehicle 100, the method may be performed by the computing platform 130 in the vehicle 100, or may be performed by a system-on-chip (system-on-chip, SoC) in the computing platform 130, or may be performed by the processor in the computing platform 130. The following describes the method 500 by using a first control unit as the execution body. The method 500 may include step S501 to step S503.

S501: Obtain a recharge power capability value of a vehicle.

Optionally, the recharge power capability value may be a vehicle recharge power capability value. To be specific, the first control unit may obtain the vehicle recharge power capability value through computation based on a parameter of a battery and/or a parameter of a motor of the vehicle.

Optionally, the recharge power capability value may alternatively be a recharge power capability value of a battery BMS or a recharge power capability value of the motor.

In an embodiment, before step S501, the method 500 further includes: determining that the vehicle is in a non-one-pedal driving mode.

Alternatively, the foregoing implementation may be replaced with determining that the vehicle is in a two-pedal driving mode.

In an embodiment, the determining that the vehicle is in a non-one-pedal driving mode includes: detecting a first input of a user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

S502: Determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle; or determine, based on a traveling parameter of the vehicle, the electric braking torque and the hydraulic braking torque when the recharge power capability value is greater than a second threshold.

The target energy recovery torque may be determined based on a traveling speed and/or an accelerator pedal opening of the vehicle. The maximum allowed energy recovery torque indicates a maximum value of an energy recovery torque allowed by the vehicle.

Optionally, the maximum value of the energy recovery torque allowed by the vehicle may be determined based on at least one of a recharge capability value of the battery management system of the vehicle, a recharge torque capability value of the motor, and the like, and the value may change based on a plurality of factors such as a charging capability of the battery of the vehicle and a charging capability of a charging apparatus.

In an embodiment, when the recharge power capability value is less than or equal to the first threshold, the first control unit may determine the hydraulic braking torque according to the following formula:

Hydraulic braking torque=|Target energy recovery torque|-|Vehicle maximum allowed capability recovery torque|

Herein, ‖ may be understood as an absolute value.

In an embodiment, when the recharge power capability value is less than or equal to the first threshold, the first control unit may determine the hydraulic braking torque based on a mapping relationship between the hydraulic braking torque, and the target energy recovery torque and the vehicle maximum allowed capability recovery torque.

Optionally, the determining an electric braking torque of the vehicle as a preset value when the recharge power capability value is less than or equal to a first threshold may be understood as setting the electric braking torque of the vehicle during braking to 0 or a small value. Under the preset value, electric braking of the vehicle cannot function. In addition, when the electric braking torque of the vehicle is determined as the preset value, it does not mean that a coasting braking torque of the vehicle in a coasting state is 0. The coasting braking torque of the vehicle may be determined based on the traveling parameter of the vehicle.

Optionally, the second threshold may be greater than or equal to the first threshold. For example, the first threshold is 50 kilowatts, and the second threshold is 60 kilowatts, or both the first threshold and the second threshold are 50 kilowatts.

In an embodiment, the determining an electric braking torque of the vehicle as a preset value when the recharge power capability value is less than or equal to a first threshold includes: controlling a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle. In this way, when the vehicle is in an energy recovery limited state, the type-B regenerative braking system can be controlled to be in a non-operative state. Then, when the vehicle performs hydraulic braking, the type-B regenerative braking system does not participate in energy recovery, to avoid impact on a chassis braking system.

Optionally, the controlling a type-B electric regenerative braking system to be turned off may include: controlling a braking energy recovery capability value of the type-B electric regenerative braking system to be the preset value (for example, 0).

Optionally, the control type-B electric regenerative braking system may be specifically located in the first control unit.

In an embodiment, the determining, based on a traveling parameter, the electric braking torque and the hydraulic braking torque when the recharge power capability value is greater than a second threshold includes: controlling a type-B electric regenerative braking system to be turned on. In this way, when the vehicle is not in an energy recovery limited state, energy recovery of the vehicle can be optimized, braking performance of the vehicle can be improved, and stability of a braking system can be improved, to provide safer, more comfortable, and more efficient driving experience for a driver.

In an embodiment, before step S502, the method 500 further includes: obtaining the traveling parameter of the vehicle, where the traveling parameter includes one or more of the traveling speed, an acceleration, and a brake pedal opening of the vehicle.

S503: Send first indication information.

The first indication information may include the hydraulic braking torque, or the first indication information may include the electric braking torque and the hydraulic braking torque. The first control unit may send the first indication information to a second control unit. After receiving the first indication information, the second control unit may perform braking based on the hydraulic braking torque or based on the electric braking torque and the hydraulic braking torque.

Optionally, when the recharge power capability value is less than or equal to the first threshold, the first indication information sent by the first control unit to the second control unit may include the hydraulic braking torque. When the recharge power capability value is greater than the second threshold, the first indication information sent by the first control unit to the second control unit may include the electric braking torque and the hydraulic braking torque. In this case, the electric braking torque may be a specific value, to be specific, the second control unit may directly perform electric braking based on the electric braking torque. Alternatively, the electric braking torque may be a threshold, to be specific, the second control unit may select a value within a range of the electric braking torque to perform electric braking.

Optionally, the first control unit may include a VDC or a VCU, and the second control unit may include an IPB or an ESC.

In this embodiment of this application, the first control unit can determine, based on a relationship between the recharge power capability value and the first threshold, whether the vehicle is in the energy recovery limited state. When the vehicle is in the energy recovery limited state, the first control unit can set the electric braking torque to the preset value, and determine the hydraulic braking torque of the vehicle based on the target energy recovery torque and the maximum allowed energy recovery torque of the vehicle. When the vehicle is not in the energy recovery limited state, the first control unit can determine the electric braking torque and the hydraulic braking torque of the vehicle based on the traveling parameter of the vehicle. After determining the electric braking torque and the hydraulic braking torque, the first control unit can send the first indication information to the second control unit. The second control unit can implement braking of the vehicle based on an indication of the first indication information. In this manner, it can be determined in time whether the vehicle is in the energy recovery limited state, and stability and controllability of a braking force of the vehicle can be ensured. This provides more comfortable and safer driving experience for the user.

It should be understood that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

FIG. 6 is a schematic flowchart of another braking method according to an embodiment of this application. An execution body of the method 600 may be a vehicle, or may be a control unit. When the execution body of the method 600 is the vehicle 100, the method may be performed by the computing platform 130 in the vehicle 100, or may be performed by a SoC in the computing platform 130, or may be performed by the processor in the computing platform 130. The following describes the method 600 by using a second control unit as the execution body. The method 600 may include step S601 to step S603.

S601: Obtain a recharge power capability value of a vehicle.

Optionally, the recharge power capability value may be a vehicle recharge power capability value. To be specific, the second control unit may obtain the vehicle recharge power capability value through computation based on a parameter of a battery and/or a parameter of a motor of the vehicle. Alternatively, the second control unit may receive the vehicle recharge power capability value sent by a first control unit.

Optionally, the recharge power capability value may alternatively be a recharge power capability value of a battery BMS or a recharge power capability value of the motor.

In an embodiment, before step S601, the method 600 further includes: determining that the vehicle is in a non-one-pedal driving mode.

Alternatively, the foregoing implementation may be replaced with determining that the vehicle is in a two-pedal driving mode.

In an embodiment, the determining that the vehicle is in a non-one-pedal driving mode includes: detecting a first input of a user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

S602: Determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle; or determine, based on a traveling parameter of the vehicle, the electric braking torque and the hydraulic braking torque when the recharge power capability value is greater than a second threshold.

The target energy recovery torque may be determined based on a traveling speed and/or an accelerator pedal opening of the vehicle. The maximum allowed energy recovery torque indicates a maximum value of an energy recovery torque allowed by the vehicle.

Optionally, the maximum value of the energy recovery torque allowed by the vehicle may be determined based on at least one of a recharge capability value of the battery management system of the vehicle, a recharge torque capability value of the motor, and the like, and the value may change based on a plurality of factors such as a charging capability of the battery of the vehicle and a charging capability of a charging apparatus.

In an embodiment, when the recharge power capability value is less than or equal to the first threshold, the second control unit may determine the hydraulic braking torque according to the following formula:

Hydraulic braking torque=|Target energy recovery torque|-|Vehicle maximum allowed capability recovery torque|

Herein, ‖ may be understood as an absolute value.

In an embodiment, when the recharge power capability value is less than or equal to the first threshold, the second control unit may determine the hydraulic braking torque based on a mapping relationship between the hydraulic braking torque, and the target energy recovery torque and the vehicle maximum allowed capability recovery torque.

Optionally, the determining an electric braking torque of the vehicle as a preset value when the recharge power capability value is less than or equal to a first threshold may be understood as setting the electric braking torque of the vehicle during braking to 0 or a small value. Under the preset value, electric braking of the vehicle cannot function. In addition, when the electric braking torque of the vehicle is determined as the preset value, it does not mean that a coasting braking torque of the vehicle in a coasting state is 0. The coasting braking torque of the vehicle may be determined based on the traveling parameter of the vehicle.

Optionally, the second threshold may be greater than or equal to the first threshold. For example, the first threshold is 50 kilowatts, and the second threshold is 60 kilowatts, or both the first threshold and the second threshold are 50 kilowatts.

In an embodiment, the determining an electric braking torque of the vehicle as a preset value when the recharge power capability value is less than or equal to a first threshold includes: controlling a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle. In this way, when the vehicle is in an energy recovery limited state, the type-B regenerative braking system can be controlled to be in a non-operative state. Then, when the vehicle performs hydraulic braking, the type-B regenerative braking system does not participate in energy recovery, to avoid impact on a chassis braking system.

Optionally, the controlling a type-B electric regenerative braking system to be turned off may include: controlling a braking energy recovery capability value of the type-B electric regenerative braking system to be the preset value (for example, 0).

Optionally, the control type-B electric regenerative braking system may be specifically located in the second control unit.

In an embodiment, the determining, based on a traveling parameter, the electric braking torque and the hydraulic braking torque when the recharge power capability value is greater than a second threshold includes: controlling a type-B electric regenerative braking system to be turned on. In this way, when the vehicle is not in an energy recovery limited state, energy recovery of the vehicle can be optimized, braking performance of the vehicle can be improved, and stability of a braking system can be improved, to provide safer, more comfortable, and more efficient driving experience for a driver.

In an embodiment, before step S602, the method 600 further includes: obtaining the traveling parameter of the vehicle, where the traveling parameter includes one or more of the traveling speed, an acceleration, and a brake pedal opening of the vehicle.

S603: Perform braking based on the electric braking torque and the hydraulic braking torque.

In this embodiment of this application, the second control unit can determine, based on a relationship between the recharge power capability value and the first threshold, whether the vehicle is in the energy recovery limited state. When the vehicle is in the energy recovery limited state, the second control unit can set the electric braking torque to the preset value, and determine the hydraulic braking torque of the vehicle based on the target energy recovery torque and the maximum allowed energy recovery torque of the vehicle. When the vehicle is not in the energy recovery limited state, the second control unit can determine the electric braking torque and the hydraulic braking torque of the vehicle based on the traveling parameter of the vehicle. After determining the electric braking torque and the hydraulic braking torque, the second control unit can implement braking of the vehicle. In this manner, whether the vehicle is in the energy recovery limited state can be determined in time, to bring good driving experience to the user.

It should be understood that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

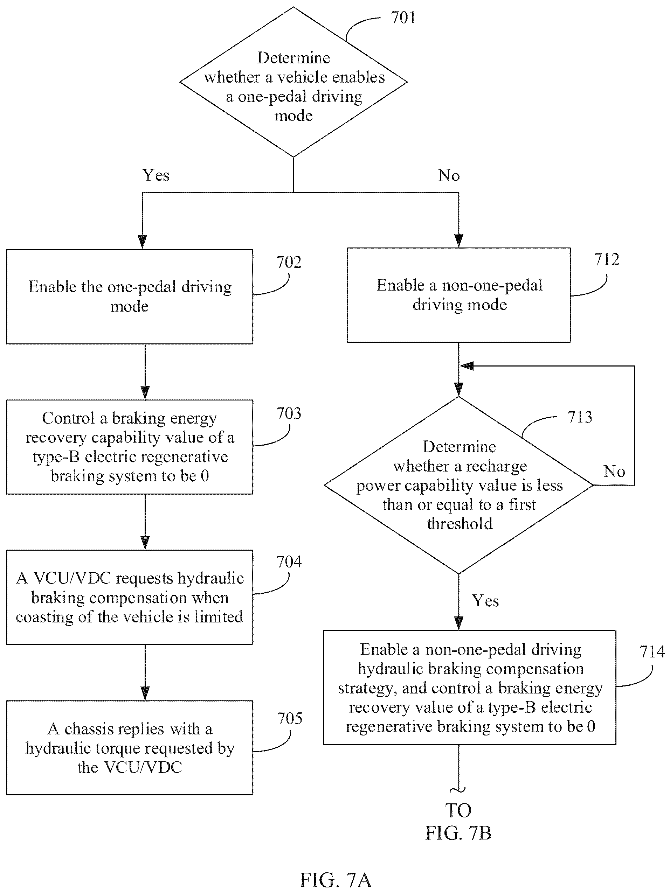

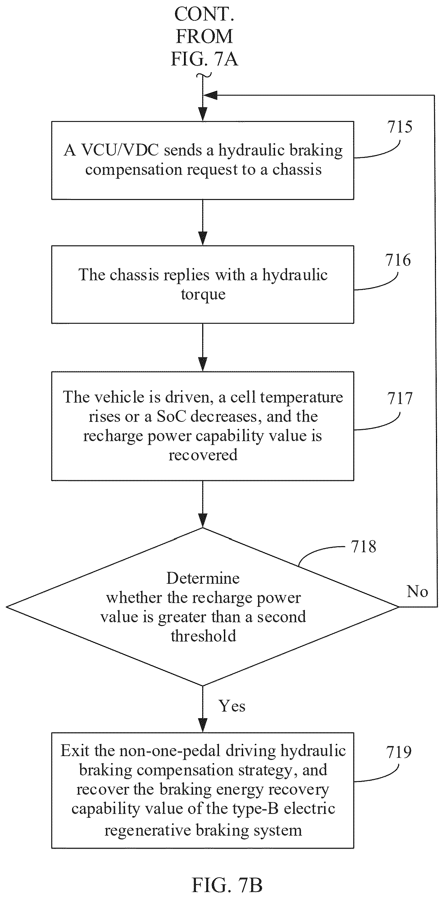

FIG. 7A and FIG. 7B are a schematic flowchart of another braking method according to an embodiment of this application. The method 700 may be applied to the architecture 300. The method 700 may include the following steps.

S701: Determine whether a vehicle enables a one-pedal driving mode.

For example, the vehicle may detect an input operation of a user on a large central display screen, and determine, based on the input operation, whether to enable or disable the one-pedal driving mode, to select a corresponding hydraulic braking compensation strategy of a VCU or a VDC. The one-pedal driving mode may be a mode in which a driver can accelerate, decelerate, or even brake the vehicle via one pedal.

The vehicle may perform step S702 after determining to enable the one-pedal driving mode. The vehicle may perform step S712 after determining not to enable the one-pedal driving mode.

S702: Enable the one-pedal driving mode.

S703: Control a braking energy recovery capability value of a type-B electric regenerative braking system to be 0.

In the one-pedal driving mode, a purpose of controlling the braking energy recovery capability value of the type-B electric regenerative braking system to be 0 is to ensure stability of hydraulic braking compensation.

Alternatively, the vehicle may control the braking energy recovery capability value of the type-B electric regenerative braking system to be another preset value that is not equal to 0.

It should be understood that the braking energy recovery capability value of the type-B electric regenerative braking system may be a power of energy that can be recovered and stored by the system in a braking process, and may indicate a rate at which the vehicle can convert kinetic energy into electric energy and store the electric energy in a battery during braking. A higher braking energy recovery capability value of the type-B electric regenerative braking system indicates higher efficiency with which the vehicle can recover the energy during braking and store the energy in the battery. This helps improve energy efficiency and a range of the vehicle, and reduce dependence on conventional frictional braking.

S704: The VCU or the VDC requests hydraulic braking compensation when coasting of the vehicle is limited.

Energy recovery is limited, and an electric braking capability of the vehicle is insufficient during coasting. Consequently, a deceleration of the vehicle is insufficient during coasting. In this case, the VCU or the VDC in the vehicle may send a hydraulic braking compensation request to a chassis (for example, an IPB), and the chassis replies with a requested hydraulic torque.

The requested hydraulic torque may be the hydraulic braking torques in the method 500 and the method 600.

S705: The chassis of the vehicle replies with the hydraulic torque requested by the VCU or the VDC.

Optionally, the requested hydraulic torque may be determined according to the following formula:

Requested hydraulic torque=|Target energy recovery torque|-|Vehicle maximum allowed capability recovery torque|

Herein, ‖ may be understood as an absolute value.

S712: Enable a non-one-pedal driving mode.

S713: Determine whether a recharge power capability value is less than or equal to a first threshold.

In the non-one-pedal driving mode, a purpose of determining, by the vehicle, whether a recharge power capability of a BMS is less than or equal to the first threshold is to pre-identify a hydraulic braking compensation scenario based on a vehicle recharge power value (an allowed recharge power).

A recharge capability of the vehicle is not limited when the vehicle is in a scenario of a non-high state of charge (state of charge, SoC), a non-low-temperature environment, or no motor fault. In this case, the recharge power capability value is larger. The recharge capability of the vehicle is limited when the vehicle is in a scenario of a high SoC, a low-temperature environment, or a motor fault. In this case, the recharge power capability value is smaller. Therefore, the hydraulic braking compensation scenario can be identified based on the recharge power capability value, to determine whether the vehicle needs to perform hydraulic braking compensation, to make up a shortage of the electric braking capability. Recharge may mean that, during braking or decelerating in a process in which the vehicle travels, some kinetic energy is converted into electric energy and the electric energy is stored in a battery, so that the electric energy is subsequently used in a driving process. The recharge power capability value may be a power of electric energy that can be absorbed by the vehicle in a recharge (or regenerative braking) process.

For example, step S714 may be performed when the recharge power capability value is less than or equal to the first threshold; or step S713 may be performed again when the recharge power capability value is not less than or equal to the first threshold.

For example, the first threshold is 50 kilowatts. The first threshold may be related to a vehicle speed and/or a target deceleration of the vehicle.

Optionally, the recharge power capability value may be a vehicle recharge power capability value. To be specific, the vehicle recharge power capability value may be determined according to the following formula:

Vehicle recharge power capability value=min(Recharge power capability value of the battery BMS, Recharge power capability value of a motor)

Optionally, the recharge power capability value may alternatively be the recharge power capability value of the battery BMS or the recharge power capability value of the motor.

S714: Enable a non-one-pedal driving hydraulic braking compensation strategy, and control a braking energy recovery capability value of a type-B electric regenerative braking system to be 0.

For example, when the recharge power capability value is less than or equal to the first threshold, an energy recovery capability of the vehicle is limited, and the vehicle enables the hydraulic braking compensation strategy, and controls the braking energy recovery capability value of the type-B electric regenerative braking system to be 0.

S715: The VCU or the VDC sends a hydraulic braking compensation request to a chassis.

For example, the energy recovery capability of the vehicle is limited in this case, and the electric braking capability of the vehicle is insufficient during coasting. Consequently, a deceleration of the vehicle is insufficient during coasting. In this case, the VCU or the VDC may send the hydraulic braking compensation request to the chassis, and the chassis replies with a requested hydraulic torque.

Optionally, the requested hydraulic torque may be determined according to the following formula:

Requested hydraulic torque=|Target energy recovery torque|-|Vehicle maximum allowed capability recovery torque|

Herein, ‖ may be understood as an absolute value.

S716: The chassis of the vehicle replies with the hydraulic torque requested by the VCU or the VDC.

S717: The vehicle is driven, a cell temperature rises or the SoC decreases, and the recharge power capability value is recovered.

The vehicle is driven, the SoC gradually decreases or the cell temperature rises, and the electric braking capability of the vehicle is gradually recovered. The vehicle recharge power capability value gradually increases.

S718: Determine whether the recharge power capability value is greater than a second threshold.

For example, step S719 may be performed if the recharge power capability value is greater than the second threshold; or step S715 is performed again if the recharge power capability value is not greater than the second threshold.

For example, the second threshold is 60 kilowatts. The second threshold may be related to the vehicle speed and/or the target deceleration of the vehicle.

The SoC gradually decreases, the cell temperature rises, or the motor fault is eliminated. Therefore, the vehicle recharge power capability value gradually rises. When the recharge power capability value is greater than the second threshold, it may be understood that energy recovery of the vehicle is limited to a small extent or is not limited, and the electric braking capability of the vehicle is recovered. In this case, the non-one-pedal driving hydraulic braking compensation strategy may be exited, and the braking energy recovery capability value of the type-B electric regenerative braking system is recovered.

S719: Exit the non-one-pedal driving hydraulic braking compensation strategy, and recover the braking energy recovery capability value of the type-B electric regenerative braking system.

In this embodiment of this application, in the one-pedal driving mode, the braking energy recovery capability value of the type-B electric regenerative braking system can be limited to 0 or a value, so that when the vehicle performs hydraulic braking compensation, performance of a chassis braking system is not affected. In the non-one-pedal driving mode, the hydraulic braking compensation scenario can be pre-identified. When energy recovery of the vehicle is limited, the braking energy recovery capability value of the type-B electric regenerative braking system is limited to 0 or a specific value, so that when the vehicle performs hydraulic braking compensation, performance of the chassis braking system is not affected.

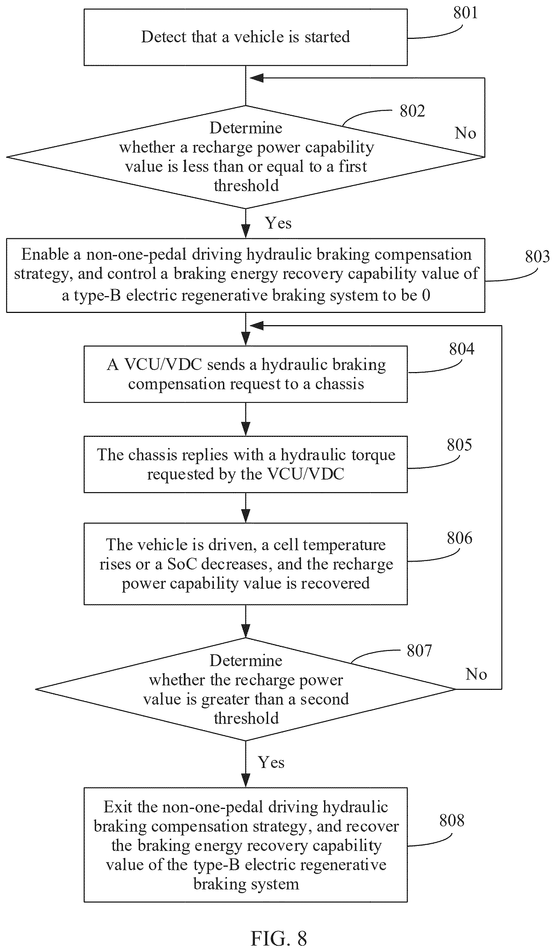

FIG. 8 is a schematic flowchart of another braking method according to an embodiment of this application. The method 800 may be applied to the architecture 400. The method 800 may be a specific implementation of the method 500 or the method 600.

S801: Detect that a vehicle is started.

S802: Determine whether a recharge power capability value is less than or equal to a first threshold.

A purpose of determining, by the vehicle, whether the recharge power capability value of a BMS is less than or equal to the first threshold is to pre-identify a hydraulic braking compensation scenario based on the recharge power capability value.

A recharge capability of the vehicle is not limited in a scenario of a non-high SoC, a non-low-temperature environment, or no motor fault. In this case, the recharge power capability value is larger. The recharge capability of the vehicle is limited in a scenario of a high SoC, a low-temperature environment, or a motor fault. In this case, the recharge power capability value is smaller. Therefore, the hydraulic braking compensation scenario can be pre-identified based on the recharge power capability value, to determine whether the vehicle needs to perform hydraulic braking compensation, to make up a shortage of an electric braking capability.

For example, step S803 may be performed when the recharge power capability value is less than or equal to the first threshold; or step S802 may be performed again when the recharge power capability value is not less than or equal to the first threshold.

For example, the first threshold is 50 kilowatts. The first threshold may be related to a vehicle speed and/or a target deceleration of the vehicle.

Optionally, the recharge power capability value may be a vehicle recharge power capability value. To be specific, the vehicle recharge power capability value may be determined according to the following formula:

Vehicle recharge power capability value=min(Recharge power capability value of the battery BMS, Recharge power capability value of a motor)

Optionally, the recharge power capability value may alternatively be the recharge power capability value of the battery BMS or the recharge power capability value of the motor.

S803: Enable a non-one-pedal driving hydraulic braking compensation strategy, and control a braking energy recovery capability value of a type-B electric regenerative braking system to be 0.

For example, when the recharge power capability value is less than or equal to the first threshold, an energy recovery capability of the vehicle is limited, and the vehicle enables the hydraulic braking compensation strategy, and controls the braking energy recovery capability value of the type-B electric regenerative braking system to be 0.

S804: A VCU or A VDC sends a hydraulic braking compensation request to a chassis.

For example, the energy recovery capability of the vehicle is limited in this case, and the electric braking capability of the vehicle is insufficient during coasting. Consequently, a deceleration of the vehicle is during coasting. In this case, the VCU or the VDC may send the hydraulic braking compensation request to the chassis, and the chassis replies with a requested hydraulic torque.

Optionally, the requested hydraulic torque may be determined according to the following formula:

Requested hydraulic torque=|Target energy recovery torque|-|Vehicle maximum allowed capability recovery torque|

Herein, ‖ may be understood as an absolute value.

S805: The chassis replies with the hydraulic torque.

S806: The vehicle is driven, and a cell temperature rises, the SoC decreases, or the recharge power capability value is recovered.

The vehicle is driven, the SoC gradually decreases or the cell temperature rises, and the electric braking capability of the vehicle is gradually recovered. The vehicle recharge power capability value gradually increases.

S807: Determine whether the recharge power capability value is greater than a second threshold.

For example, step S808 may be performed if the recharge power capability value is greater than the second threshold; or step S804 is performed again if the recharge power capability value is not greater than the second threshold.

For example, the second threshold is 60 kilowatts. The second threshold may be related to the vehicle speed and/or the target deceleration of the vehicle.

The SoC gradually decreases, the cell temperature rises, or the motor fault is eliminated. Therefore, the vehicle recharge power capability value gradually rises. When the recharge power capability value is greater than the second threshold, it may be understood that energy recovery of the vehicle is limited to a small extent or is not limited, and the electric braking capability of the vehicle is recovered. In this case, the non-one-pedal driving hydraulic braking compensation strategy may be exited, and the braking energy recovery capability value of the type-B electric regenerative braking system is recovered.

S808: Exit the non-one-pedal driving hydraulic braking compensation strategy, and recover the braking energy recovery capability value of the type-B electric regenerative braking system.

In this embodiment of this application, the vehicle may directly pre-identify the hydraulic braking compensation scenario without distinguishing between a one-pedal driving mode and a non-one-pedal driving mode. When energy recovery of the vehicle is limited, the braking energy recovery capability value of the type-B electric regenerative braking system can be limited to 0 or a specific value, so that when the vehicle performs hydraulic braking compensation, performance of a chassis braking system is not affected.

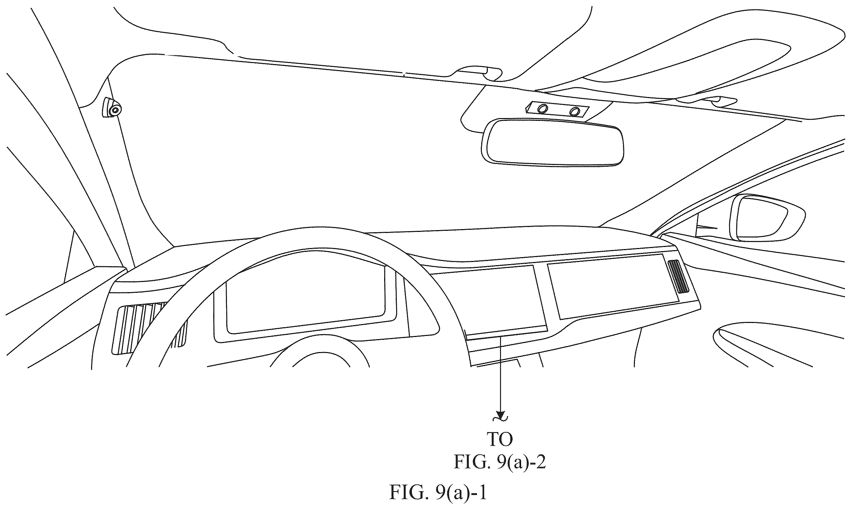

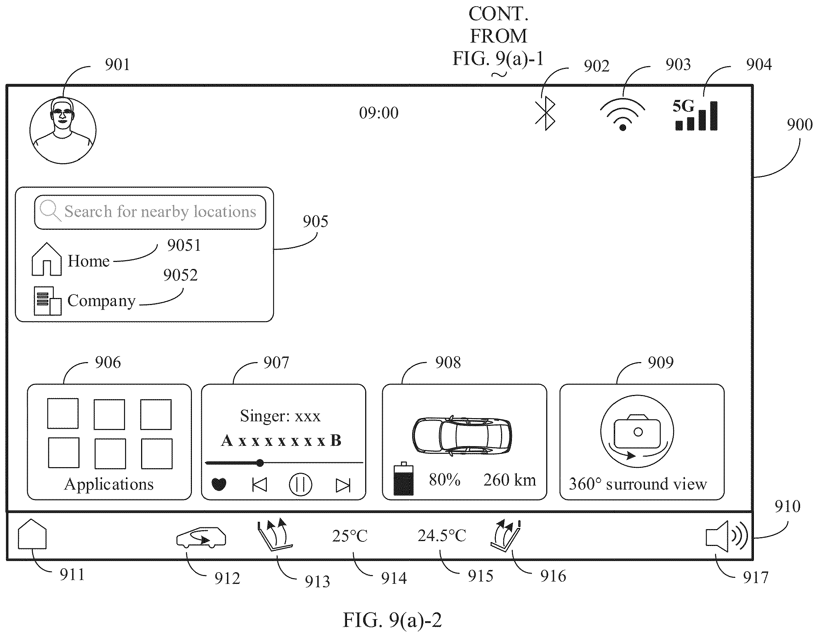

FIG. 9(a)-1 to FIG. 9(e) are a diagram of an application scenario to which a braking method is applicable according to an embodiment of this application. The method 400 to the method 700 may be applied to this scenario.

As shown in FIG. 9(a)-1 to FIG. 9(e), when a vehicle is in an initial state, a large central display screen of the vehicle displays a display interface 900 and a function bar 910. The display interface 900 includes user account login information 901, a Bluetooth function icon 902, a Wi-Fi function icon 903, a cellular network signal icon 904, an in-vehicle map application search box 905, a card 906 for switching to display all applications installed on the vehicle, a card 907 for switching to display an in-vehicle music application, a card 908 for displaying a state of charge and a remaining mileage of the vehicle, and a card 909 for displaying a 360-degree (°) surround-view function of the vehicle. The in-vehicle map application search box 905 may include a home control 9051 and a company control 9052 that are set by a user. The function bar 910 includes an icon 911 for switching to display a desktop of the large central display screen, a vehicle inside air icon 912, and a driver's seat heating function icon 913, a driver area air conditioning temperature display icon 914, a front passenger area air conditioning temperature display icon 915, a front passenger's seat heating function icon 916, and a volume setting icon 917.

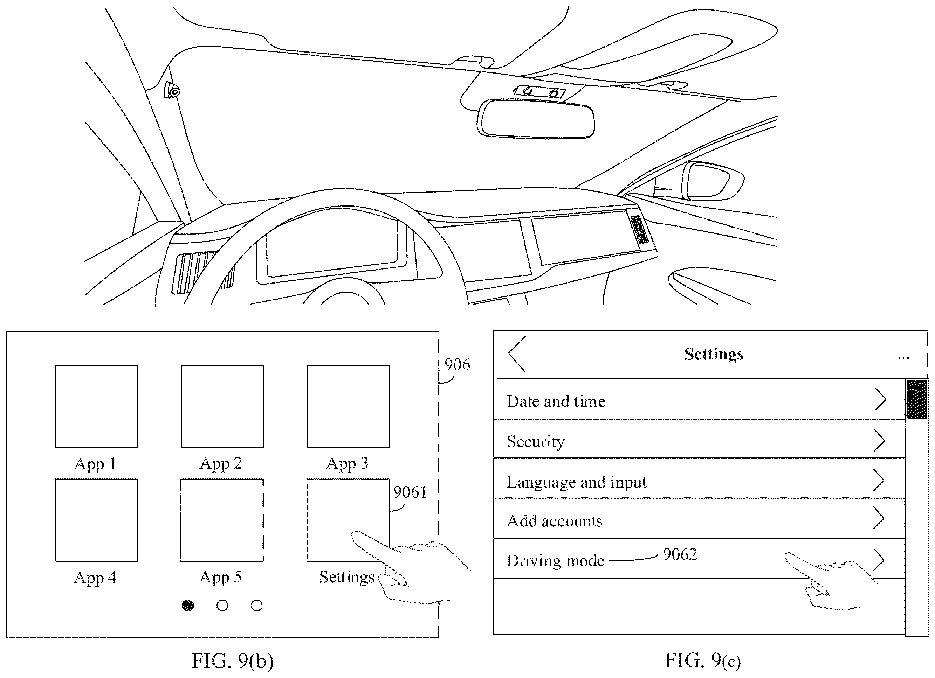

As shown in FIG. 9(b), a graphical user interface (graphical user interface, GUI) is an interaction interface of the card 906 for the applications. When the vehicle detects an operation of tapping a settings option 9061 by a user, the display screen of the vehicle may display a GUI shown in FIG. 9(c).

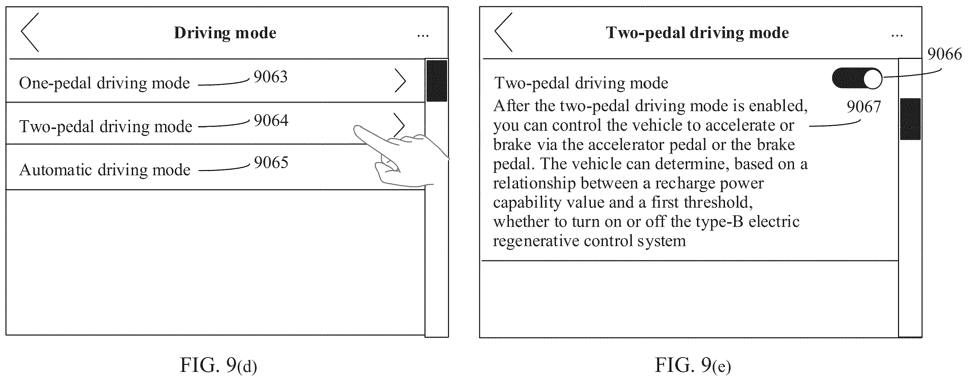

As shown in FIG. 9(c), the GUI is a settings interface. The settings interface includes a date and time option, a security option, a language and input option, an account adding option, and a driving mode option 9062. When the vehicle detects an operation of tapping the driving mode option 9062 by the user, the display screen of the vehicle may display a GUI shown in FIG. 9(d).

As shown in FIG. 9(d), the GUI is a driving mode interface. The interface includes a one-pedal driving mode option 9063, a two-pedal driving mode option 9064, and an automatic driving mode option 9065. After the vehicle detects that the user taps the two-pedal driving mode option 9064, the display screen of the vehicle may display a GUI shown in FIG. 9(e).

As shown in FIG. 9(e), the GUI is a two-pedal driving mode interface, and includes a control 9066 and a description text 9067 of the two-pedal driving mode. The user may enable or disable the two-pedal driving mode by using the control 9066. After the vehicle detects that the user enables the two-pedal driving mode, the vehicle may obtain a recharge power capability value, and determine, based on a relationship between the recharge power capability value and a first threshold, whether the vehicle is in an energy recovery limited state. When the vehicle is in the energy recovery limited state, the vehicle may set an electric braking torque to a preset value, and determine a hydraulic braking torque of the vehicle based on a target energy recovery torque and a maximum allowed energy recovery torque of the vehicle. When the vehicle is not in the energy recovery limited state, the vehicle may determine the electric braking torque and the hydraulic braking torque of the vehicle based on a traveling parameter of the vehicle. The vehicle may perform braking after determining the electric braking torque and the hydraulic braking torque. In this manner, whether the vehicle is in the energy recovery limited state can be determined in time, and stability and controllability of a braking force of the vehicle can be ensured, to provide more comfortable and safer driving experience for the user.

In addition, the vehicle may further determine, based on the relationship between the recharge power capability value and the first threshold, whether to turn on or off a type-B electric regenerative braking system. When the recharge power capability value is less than or equal to the first threshold, the vehicle may control the type-B electric regenerative braking system to be turned off. In this way, when the vehicle is in the energy recovery limited state, the type-B regenerative braking system can be controlled to be in a non-operative state. Then, when the vehicle performs hydraulic braking, the type-B regenerative braking system does not participate in energy recovery, to avoid impact on a chassis braking system. When the recharge power capability value is greater than a second threshold, the vehicle may control the type-B electric regenerative braking system to be enabled. In this way, when the vehicle is not in the energy recovery limited state, energy recovery of the vehicle can be optimized, braking performance of the vehicle can be improved, and stability of a braking system can be improved, to provide safer, more comfortable, and more efficient driving experience for a driver.

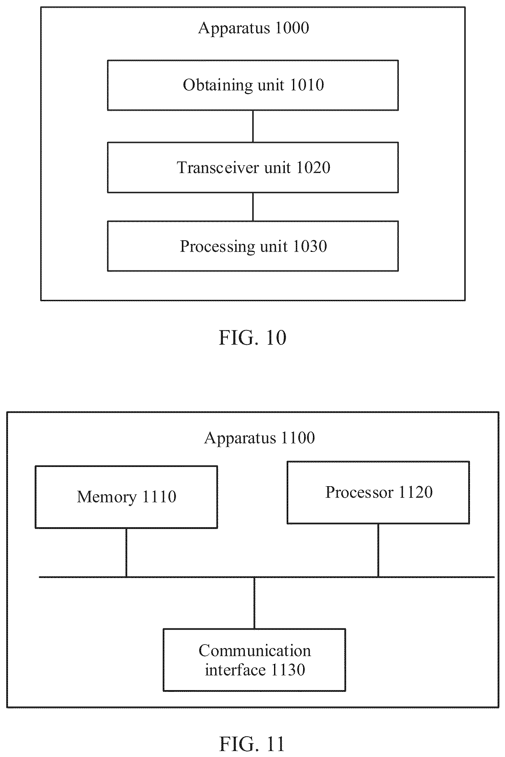

FIG. 10 is a diagram of a braking apparatus 1000 according to an embodiment of this application. The apparatus 1000 may include an obtaining unit 1010, a transceiver unit 1020, and a processing unit 1030. The obtaining unit 1010 is configured to obtain an instruction and/or data. The transceiver unit 1020 is configured to: receive and send instructions and/or data. The processing unit 1030 is configured to perform data processing. In this way, the apparatus 1000 implements the foregoing braking methods.

Optionally, the apparatus 1000 may further include a storage unit, configured to: implement a corresponding storage function, and store a corresponding instruction and/or data.

In a design, the apparatus 1000 is configured to perform actions performed by the first control unit in the method 500.

The apparatus 1000 includes: the obtaining unit 1010, configured to obtain a recharge power capability value of a vehicle; the processing unit 1030, configured to: determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determine, based on a traveling parameter of the vehicle, the electric braking torque and the hydraulic braking torque when the recharge power capability value is greater than a second threshold; and the transceiver unit 1020, configured to send first indication information, where the first indication information includes the hydraulic braking torque, or the first indication information includes the electric braking torque and the hydraulic braking torque.

In a possible implementation, the processing unit 1030 is specifically configured to control a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

In a possible implementation, the obtaining unit 1010 is further configured to obtain the traveling parameter of the vehicle, where the traveling parameter includes one or more of the traveling speed, an acceleration, and a brake pedal opening.

In a possible implementation, the processing unit 1030 is specifically configured to control a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

In a possible implementation, the processing unit 1030 is further configured to determine that the vehicle is in a non-one-pedal driving mode.

In a possible implementation, the processing unit 1030 is specifically configured to: detect a first input of a user for the vehicle; and in response to the first input, disable a one-pedal driving mode of the vehicle.

In a design, the apparatus 1000 is configured to perform actions performed by the second control unit in the method 500.

The apparatus 1000 includes: the transceiver unit 1020, configured to receive first indication information, where the first indication information includes a hydraulic braking torque, or the first indication information includes an electric braking torque and the hydraulic braking torque; and the processing unit 1030, configured to perform braking based on the hydraulic braking torque, or perform braking based on the electric braking torque and the hydraulic braking torque.

In a design, the apparatus 1000 is configured to perform actions performed by the second control unit in the method 600.

The apparatus 1000 includes: the obtaining unit 1010, configured to obtain a recharge power capability value of a vehicle; and the processing unit 1030, configured to: determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, where the target energy recovery torque is determined based on a traveling speed and/or an accelerator pedal opening of the vehicle, and the maximum allowed energy recovery torque indicates a maximum value of an energy recovery torque allowed by the vehicle; or determine, based on a traveling parameter of the vehicle, the electric braking torque and the hydraulic braking torque when the recharge power capability value is greater than a second threshold; and perform braking based on the electric braking torque and the hydraulic braking torque.

In a possible implementation, the apparatus includes: the obtaining unit 1010, configured to obtain the recharge power capability value of the vehicle; and the processing unit 1030, configured to: determine the electric braking torque of the vehicle as the preset value when the recharge power capability value is less than or equal to the first threshold, and determine the hydraulic braking torque of the vehicle based on the target energy recovery torque and the maximum allowed energy recovery torque of the vehicle, where the target energy recovery torque is determined based on the traveling speed and/or the accelerator pedal opening of the vehicle, and the maximum allowed energy recovery torque is determined based on a recharge torque capability value of a battery management system of the vehicle and a recharge torque capability value of a motor; or determine, based on the traveling parameter of the vehicle, the electric braking torque and the hydraulic braking torque when the recharge power capability value is greater than a second threshold; and perform braking based on the electric braking torque and the hydraulic braking torque.

In a possible implementation, the processing unit 1030 is specifically configured to control a type-B electric regenerative braking system to be turned off, where the type-B electric regenerative braking system is located in the vehicle, and the type-B electric regenerative braking system is configured to adjust a distribution ratio of the electric braking torque to the hydraulic braking torque of the vehicle.

In a possible implementation, the obtaining unit 1010 is further configured to obtain the traveling parameter of the vehicle, where the traveling parameter includes one or more of the traveling speed, an acceleration, and a brake pedal opening.

In a possible implementation, the processing unit 1030 is specifically configured to control a type-B electric regenerative braking system to be turned on, where the type-B electric regenerative braking system is located in the vehicle, and the type-B electric regenerative braking system is configured to adjust a distribution ratio of the electric braking torque to the hydraulic braking torque of the vehicle.

In a possible implementation, the processing unit 1030 is further configured to determine that the vehicle is in a non-one-pedal driving mode.

In a possible implementation, the processing unit 1030 is specifically configured to: detect a first input of a user for the vehicle; and in response to the first input, disable a one-pedal driving mode of the vehicle.

Optionally, if the apparatus 1000 is located in the vehicle 100, the processing unit 1030 may be the processor 131 shown in FIG. 1.

FIG. 11 is a diagram of another braking apparatus 1100 according to an embodiment of this application.

The apparatus 1100 includes a memory 1110, a processor 1120, and a communication interface 1130. The memory 1110, the processor 1120, and the communication interface 1130 are connected to each other through an internal connection path. The memory 1110 is configured to store instructions. The processor 1120 is configured to execute the instructions stored in the memory 1110, to control the communication interface 1130 to obtain information, or to enable the apparatus 1100 to perform the foregoing braking methods. Optionally, the memory 1110 may be coupled to the processor 1120 through an interface, or may be integrated with the processor 1120.

It should be noted that the communication interface 1130 is a transceiver apparatus, for example, but not limited to, a transceiver. The communication interface 1130 may further include an input/output interface (input/output interface).

The processor 1120 stores one or more computer programs. The one or more computer programs include instructions. When the instructions are run by the processor 1120, the braking apparatus 1100 is enabled to perform the braking methods in the foregoing embodiments.

In an implementation process, steps in the foregoing methods may be implemented through a hardware integrated logical circuit in the processor 1120 or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1110. The processor 1120 reads information in the memory 1110 and completes the steps in the foregoing methods in combination with the hardware of the processor. To avoid repetition, details are not described herein again.

Optionally, the communication interface 1130 in FIG. 11 may implement the obtaining unit 1010 and the transceiver unit 1020 in FIG. 10. The processor 1120 in FIG. 11 may implement the processing unit 1030 in FIG. 10.

Optionally, the apparatus 1000 or the apparatus 1100 may be located in the vehicle 100 in FIG. 1.

Optionally, the apparatus 1000 or the apparatus 1100 may be the computing platform 130 in the vehicle in FIG. 1.

An embodiment of this application further provides a computer-readable storage medium. The computer-readable storage medium stores program code. When the computer program code is run on a computer, the computer is enabled to perform any one of the methods in FIG. 5 to FIG. 8.

An embodiment of this application further provides a computer program product. The computer product includes a computer program. When the computer program is run, a computer is enabled to perform any one of the methods in FIG. 5 to FIG. 8.

An embodiment of this application further provides a chip, including a circuit. The circuit is configured to perform any one of the methods in FIG. 5 to FIG. 8.

An embodiment of this application further provides a vehicle, including the braking apparatus shown in FIG. 10 or FIG. 11.

A person of ordinary skill in the art may be aware that units and algorithm steps in the examples described with reference to embodiments disclosed in this specification can be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. A part or all of the units may be selected based on an actual requirement, to achieve the objectives of the solutions in embodiments.

In addition, functional units in embodiments of this application may be integrated into one processing unit, or each of the units may exist alone physically, or two or more units may be integrated into one unit.

The functions may be stored in a computer-readable storage medium when the functions are implemented in a form of a software functional unit and sold or used as an independent product. Based on such an understanding, the technical solutions of this application essentially, or the part contributing to the conventional technology, or a part of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

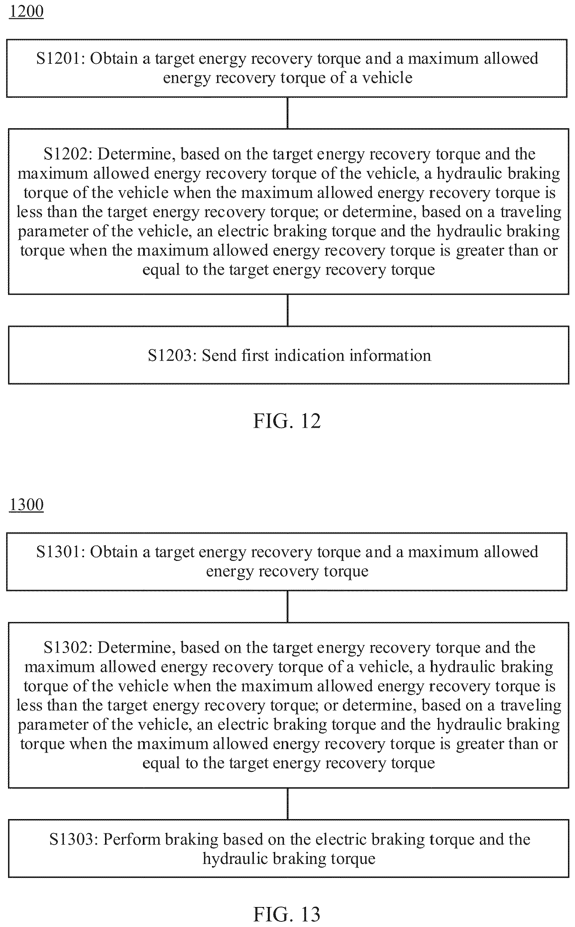

FIG. 12 is a schematic flowchart of another braking method according to an embodiment of this application. An execution body of the method 1200 may be a vehicle, or may be a control unit. When the execution body of the method 1200 is the vehicle 100, the method may be performed by the computing platform 130 in the vehicle 100, or may be performed by a system-on-chip (system-on-chip, SoC) in the computing platform 130, or may be performed by the processor in the computing platform 130. The following describes the method 1200 by using a first control unit as the execution body. The method 1200 may include step S1201 to step S1203.

S1201: Obtain a target energy recovery torque and a maximum allowed energy recovery torque of a vehicle.

The target energy recovery torque may be determined based on a traveling speed and/or an accelerator pedal opening of the vehicle. The maximum allowed energy recovery torque indicates a maximum value of an energy recovery torque allowed by the vehicle.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

In an embodiment, before step S1201, the method 1200 further includes: determining that the vehicle is in a non-one-pedal driving mode.

Alternatively, the foregoing implementation may be replaced with determining that the vehicle is in a two-pedal driving mode.

In an embodiment, the determining that the vehicle is in a non-one-pedal driving mode includes: detecting a first input of a user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

S1202: Determine, based on the target energy recovery torque and the maximum allowed energy recovery torque of the vehicle, a hydraulic braking torque of the vehicle when the maximum allowed energy recovery torque is less than the target energy recovery torque; or determine, based on a traveling parameter of the vehicle, an electric braking torque and the hydraulic braking torque when the maximum allowed energy recovery torque is greater than or equal to the target energy recovery torque.

In an embodiment, when the maximum allowed energy recovery torque is less than the target energy recovery torque, the first control unit may determine the hydraulic braking torque according to the following formula:

Hydraulic braking torque=|Target energy recovery torque|-|Vehicle maximum allowed capability recovery torque|

Herein, ‖ may be understood as an absolute value.

In an embodiment, when the maximum allowed energy recovery torque is less than the target energy recovery torque, the first control unit may determine the hydraulic braking torque based on a mapping relationship between the hydraulic braking torque, and the target energy recovery torque and the vehicle maximum allowed capability recovery torque.

Optionally, before the determining, based on the target energy recovery torque and the maximum allowed energy recovery torque, a hydraulic braking torque of the vehicle, step S1202 further includes: determining the electric braking torque or an electric braking power as a preset value.

Optionally, the determining the electric braking torque or an electric braking power of the vehicle as a preset value may be understood as setting the electric braking torque or the electric braking power of the vehicle during braking to any value.

In an embodiment, the determining the electric braking torque or an electric braking power as a preset value includes: controlling an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle. In this way, when the vehicle is in an energy recovery limited state, the electric braking capability of the type-B regenerative braking system can be controlled to be in a non-functioning state. Then, when the vehicle performs hydraulic braking, the type-B regenerative braking system does not participate in energy recovery, to avoid impact on a chassis braking system.

Optionally, the controlling an electric braking capability of a type-B electric regenerative braking system to be disabled may include: controlling a braking energy recovery capability value of the type-B electric regenerative braking system to be the preset value (for example, 0).

Optionally, the control type-B electric regenerative braking system may be specifically located in the first control unit.

In an embodiment, the determining, based on a traveling parameter, an electric braking torque and the hydraulic braking torque when the maximum allowed energy recovery torque is greater than or equal to the target energy recovery torque includes: controlling an electric braking capability of a type-B electric regenerative braking system to be enabled. In this way, when the vehicle is not in an energy recovery limited state, energy recovery of the vehicle can be optimized, braking performance of the vehicle can be improved, and stability of a braking system can be improved, to provide safer, more comfortable, and more efficient driving experience for a driver.

In an embodiment, before step S1202, the method 1200 further includes: obtaining the traveling parameter of the vehicle, where the traveling parameter includes one or more of the traveling speed, an acceleration, and a brake pedal opening of the vehicle.

S1203: Send first indication information.

The first indication information may include the hydraulic braking torque, or the first indication information may include the electric braking torque and the hydraulic braking torque. The first control unit may send the first indication information to a second control unit. After receiving the first indication information, the second control unit may perform braking based on the hydraulic braking torque or based on the electric braking torque and the hydraulic braking torque.

Optionally, when the maximum allowed energy recovery torque is less than the target energy recovery torque, the first indication information sent by the first control unit to the second control unit may include the hydraulic braking torque. When the maximum allowed energy recovery torque is greater than or equal to the target energy recovery torque, the first indication information sent by the first control unit to the second control unit may include the electric braking torque and the hydraulic braking torque. In this case, the electric braking torque may be a specific value, to be specific, the second control unit may directly perform electric braking based on the electric braking torque. Alternatively, the electric braking torque may be a threshold, to be specific, the second control unit may select a value within a range of the electric braking torque to perform electric braking.

Optionally, the first control unit may include a VDC or a VCU, and the second control unit may include an IPB or an ESC.

In this embodiment of this application, the first control unit can determine, based on a relationship between the target energy recovery torque and the maximum allowed energy recovery torque, whether the vehicle is in the energy recovery limited state. When the vehicle is in the energy recovery limited state, the first control unit can determine the hydraulic braking torque of the vehicle based on the target energy recovery torque and the maximum allowed energy recovery torque of the vehicle. When the vehicle is not in the energy recovery limited state, the first control unit can determine the electric braking torque and the hydraulic braking torque of the vehicle based on the traveling parameter of the vehicle. After determining the electric braking torque and the hydraulic braking torque, the first control unit can send the first indication information to the second control unit. The second control unit can implement braking of the vehicle based on an indication of the first indication information. In this manner, it can be determined in time whether the vehicle is in the energy recovery limited state, and stability and controllability of a braking force of the vehicle can be ensured. This provides more comfortable and safer driving experience for the user.

It should be understood that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

FIG. 13 is a schematic flowchart of another braking method according to an embodiment of this application. An execution body of the method 1300 may be a vehicle, or may be a control unit. When the execution body of the method 1300 is the vehicle 100, the method may be performed by the computing platform 130 in the vehicle 100, or may be performed by a system-on-chip (system-on-chip, SoC) in the computing platform 130, or may be performed by the processor in the computing platform 130. The following describes the method 1300 by using a first control unit as the execution body. The method 1300 may include step S1301 to step S1303.

S1301: Obtain a target energy recovery torque and a maximum allowed energy recovery torque of a vehicle.

The target energy recovery torque may be determined based on a traveling speed and/or an accelerator pedal opening of the vehicle. The maximum allowed energy recovery torque indicates a maximum value of an energy recovery torque allowed by the vehicle.

Optionally, the maximum value of the energy recovery torque allowed by the vehicle may be determined based on at least one of a recharge capability value of a battery management system of the vehicle, a recharge torque capability value of a motor, and the like, and the value may change based on a plurality of factors such as a charging capability of a battery of the vehicle and a charging capability of a charging apparatus.

In an embodiment, before step S1301, the method 1300 further includes: determining that the vehicle is in a non-one-pedal driving mode.

Alternatively, the foregoing implementation may be replaced with determining that the vehicle is in a two-pedal driving mode.

In an embodiment, the determining that the vehicle is in a non-one-pedal driving mode includes: detecting a first input of a user for the vehicle; and in response to the first input, disabling a one-pedal driving mode of the vehicle.

Optionally, the first input may be an operation of tapping, by the user on a vehicle display, a control for disabling the one-pedal driving mode of the vehicle, or the first input may be a voice input of indicating, by the user, to disable the one-pedal driving mode of the vehicle.

S1302: Determine, based on the target energy recovery torque and the maximum allowed energy recovery torque of the vehicle, a hydraulic braking torque of the vehicle when the maximum allowed energy recovery torque is less than the target energy recovery torque; or determine, based on a traveling parameter of the vehicle, an electric braking torque and the hydraulic braking torque when the maximum allowed energy recovery torque is greater than or equal to the target energy recovery torque.

In an embodiment, when the maximum allowed energy recovery torque is less than the target energy recovery torque, the first control unit may determine the hydraulic braking torque according to the following formula:

$$\text{Hydraulic braking torque} = |\text{Target energy recovery torque}| - |\text{Vehicle maximum allowed capability recovery torque}|$$

Herein, ‖ may be understood as an absolute value.

In an embodiment, when the maximum allowed energy recovery torque is less than the target energy recovery torque, the first control unit may determine the hydraulic braking torque based on a mapping relationship between the hydraulic braking torque, and the target energy recovery torque and the vehicle maximum allowed capability recovery torque.

Optionally, before the determining, based on the target energy recovery torque and the maximum allowed energy recovery torque, a hydraulic braking torque of the vehicle, step S1302 further includes: determining the electric braking torque or an electric braking power as a preset value.

Optionally, the determining the electric braking torque or an electric braking power of the vehicle as a preset value may be understood as setting the electric braking torque or the electric braking power of the vehicle during braking to any value.

In an embodiment, the determining the electric braking torque or an electric braking power as a preset value includes: controlling an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle. In this way, when the vehicle is in an energy recovery limited state, the electric braking capability of the type-B regenerative braking system can be controlled to be in a non-functioning state. Then, when the vehicle performs hydraulic braking, the type-B regenerative braking system does not participate in energy recovery, to avoid impact on a chassis braking system.

Optionally, the controlling an electric braking capability of a type-B electric regenerative braking system to be disabled may include: controlling a braking energy recovery capability value of the type-B electric regenerative braking system to be the preset value (for example, 0).

Optionally, the control type-B electric regenerative braking system may be specifically located in the first control unit.

In an embodiment, the determining, based on a traveling parameter, an electric braking torque and the hydraulic braking torque when the maximum allowed energy recovery torque is greater than or equal to the target energy recovery torque includes: controlling an electric braking capability of a type-B electric regenerative braking system to be enabled. In this way, when the vehicle is not in an energy recovery limited state, energy recovery of the vehicle can be optimized, braking performance of the vehicle can be improved, and stability of a braking system can be improved, to provide safer, more comfortable, and more efficient driving experience for a driver.

In an embodiment, before step S1302, the method 1300 further includes: obtaining the traveling parameter of the vehicle, where the traveling parameter includes one or more of the traveling speed, an acceleration, and a brake pedal opening of the vehicle.

S1303: Perform braking based on the electric braking torque and the hydraulic braking torque.

In this embodiment of this application, a second control unit can determine, based on a relationship between the target energy recovery torque and the maximum allowed energy recovery torque, whether the vehicle is in an energy recovery limited state. When the vehicle is in the energy recovery limited state, the second control unit can determine the hydraulic braking torque of the vehicle based on the target energy recovery torque and the maximum allowed energy recovery torque of the vehicle. When the vehicle is not in the energy recovery limited state, the second control unit can determine the electric braking torque and the hydraulic braking torque of the vehicle based on the traveling parameter of the vehicle. After determining the electric braking torque and the hydraulic braking torque, the second control unit can implement braking of the vehicle. In this manner, whether the vehicle is in the energy recovery limited state can be determined in time, to bring good driving experience to a user.

It should be understood that, in embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

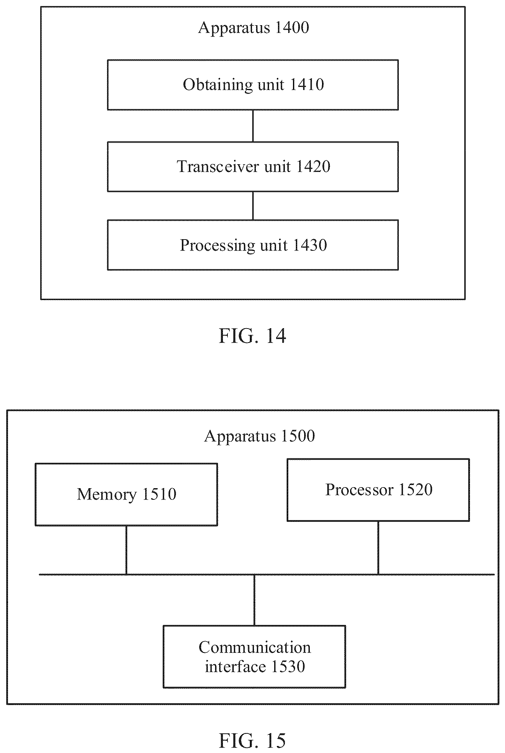

FIG. 14 is a diagram of a braking apparatus 1400 according to an embodiment of this application. The apparatus 1400 may include an obtaining unit 1410, a transceiver unit 1420, and a processing unit 1430. The obtaining unit 1410 is configured to obtain an instruction and/or data. The transceiver unit 1420 is configured to: receive and send instructions and/or data. The processing unit 1430 is configured to perform data processing. In this way, the apparatus 1400 implements the foregoing braking methods.

Optionally, the apparatus 1400 may further include a storage unit, configured to: implement a corresponding storage function, and store a corresponding instruction and/or data.

In a design, the apparatus 1400 is used for actions performed by the first control unit in the method 1000.

The apparatus 1400 includes: the obtaining unit 1410, configured to obtain a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; the processing unit 1430, configured to: determine, based on the target energy recovery torque and the maximum allowed energy recovery torque, a hydraulic braking torque of the vehicle when the maximum allowed energy recovery torque is less than the target energy recovery torque, or determine, based on a traveling parameter of the vehicle, an electric braking torque and the hydraulic braking torque when the maximum allowed energy recovery torque is greater than or equal to the target energy recovery torque; and the transceiver unit 1420, configured to send first indication information, where the first indication information includes the hydraulic braking torque, or the first indication information includes the electric braking torque and the hydraulic braking torque.

In a possible implementation, the processing unit 1430 is further configured to control an electric braking capability of a type-B electric regenerative braking system to be disabled, where the type-B electric regenerative braking system is located in the vehicle, and the type-B electric regenerative braking system is configured to adjust a distribution ratio of the electric braking torque to the hydraulic braking torque of the vehicle.

In a possible implementation, the obtaining unit 1410 is further configured to obtain the traveling parameter of the vehicle, where the traveling parameter includes one or more of the traveling speed, an acceleration, and a brake pedal opening.

In a possible implementation, the processing unit 1430 is specifically configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

In a possible implementation, the processing unit 1430 is further configured to determine that the vehicle is in a non-one-pedal driving mode.

In a possible implementation, the processing unit 1430 is specifically configured to: detect a first input of a user for the vehicle; and in response to the first input, disable a one-pedal driving mode of the vehicle.

In a design, the apparatus 1400 is configured to perform actions performed by the second control unit in the method 1000.

The apparatus 1400 includes: the obtaining unit 1410, configured to obtain a target energy recovery torque and a maximum allowed energy recovery torque of a vehicle, where the target energy recovery torque is determined based on a traveling speed and/or an accelerator pedal opening of the vehicle, and the maximum allowed energy recovery torque indicates a maximum value of an energy recovery torque allowed by the vehicle; and the processing unit 1430, configured to: determine, based on the target energy recovery torque and the maximum allowed energy recovery torque, a hydraulic braking torque of the vehicle when the maximum allowed energy recovery torque is less than the target energy recovery torque, or determine, based on a traveling parameter of the vehicle, an electric braking torque and the hydraulic braking torque when the maximum allowed energy recovery torque is greater than or equal to the target energy recovery torque; and perform braking based on the electric braking torque and the hydraulic braking torque.

In a possible implementation, the processing unit 1430 is further configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

In a possible implementation, the obtaining unit 1410 is further configured to obtain the traveling parameter of the vehicle, where the traveling parameter includes one or more of the traveling speed, an acceleration, and a brake pedal opening.

In a possible implementation, the processing unit 1430 is specifically configured to control an electric braking capability of a type-B electric regenerative braking system to be enabled, where the type-B electric regenerative braking system is located in the vehicle, and the type-B electric regenerative braking system is configured to adjust a distribution ratio of the electric braking torque to the hydraulic braking torque of the vehicle.

In a possible implementation, the processing unit 1430 is further configured to determine that the vehicle is in a non-one-pedal driving mode.

In a possible implementation, the processing unit 1430 is specifically configured to: detect a first input of a user for the vehicle; and in response to the first input, disable a one-pedal driving mode of the vehicle.

Optionally, if the apparatus 1400 is located in the vehicle 100, the processing unit 1430 may be the processor 131 shown in FIG. 1.

FIG. 15 is a diagram of another braking apparatus 1500 according to an embodiment of this application.

The apparatus 1500 includes a memory 1510, a processor 1520, and a communication interface 1530. The memory 1510, the processor 1520, and the communication interface 1530 are connected to each other through an internal connection path. The memory 1510 is configured to store instructions. The processor 1520 is configured to execute the instructions stored in the memory 1510, to control the communication interface 1530 to obtain information, or to enable the apparatus 1500 to perform the foregoing braking methods. Optionally, the memory 1510 may be coupled to the processor 1520 through an interface, or may be integrated with the processor 1520.

It should be noted that the communication interface 1530 is a transceiver apparatus, for example, but not limited to, a transceiver. The communication interface 1530 may further include an input/output interface (input/output interface).

The processor 1520 stores one or more computer programs. The one or more computer programs include instructions. When the instructions are run by the processor 1520, the braking apparatus 1500 is enabled to perform the braking methods in the foregoing embodiments.

In an implementation process, steps in the foregoing methods may be implemented through a hardware integrated logical circuit in the processor 1520 or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1510. The processor 1520 reads information in the memory 1510 and completes the steps in the foregoing methods in combination with the hardware of the processor. To avoid repetition, details are not described herein again.

Optionally, the communication interface 1530 in FIG. 15 may implement the obtaining unit 1410 and the transceiver unit 1420 in FIG. 14. The processor 1520 in FIG. 15 may implement the processing unit 1430 in FIG. 14.

Optionally, the apparatus 1400 or the apparatus 1500 may be located in the vehicle 100 in FIG. 1.

Optionally, the apparatus 1400 or the apparatus 1500 may be the computing platform 130 in the vehicle in FIG. 1.

An embodiment of this application further provides a computer-readable storage medium. The computer-readable storage medium stores program code. When the computer program code is run on a computer, the computer is enabled to perform the method in FIG. 12 or FIG. 13.

An embodiment of this application further provides a computer program product. The computer product includes a computer program. When the computer program is run, a computer is enabled to perform the method in FIG. 12 or FIG. 13.

An embodiment of this application further provides a chip, including a circuit. The circuit is configured to perform the method in FIG. 12 or FIG. 13.

An embodiment of this application further provides a vehicle, including the braking apparatus shown in FIG. 14 or FIG. 15.

**Claims**

1. A braking method, wherein the method comprises:

   obtaining a recharge power capability value of a vehicle;
   determining an electric braking torque of the vehicle as a preset value when the recharge power capability value is less than or equal to a first threshold, and determining a hydraulic braking torque of the vehicle based on a target energy recovery torque and a maximum allowed energy recovery torque of the vehicle, wherein the target energy recovery torque is determined based on a traveling speed and/or an accelerator pedal opening of the vehicle, and the maximum allowed energy recovery torque indicates a maximum value of an energy recovery torque allowed by the vehicle; or

determining, based on a traveling parameter of the vehicle, the electric braking torque and the hydraulic braking torque when the recharge power capability value is greater than a second threshold; and
sending first indication information, wherein the first indication information comprises the hydraulic braking torque, or the first indication information comprises the electric braking torque and the hydraulic braking torque.

2. The method according to claim 1, wherein the determining an electric braking torque of the vehicle as a preset value when the recharge power capability value is less than or equal to a first threshold comprises:
controlling a type-B electric regenerative braking system to be turned off, wherein the type-B electric regenerative braking system is located in the vehicle, and the type-B electric regenerative braking system is configured to adjust a distribution ratio of the electric braking torque to the hydraulic braking torque of the vehicle.

3. The method according to claim 1, wherein the method further comprises:
obtaining the traveling parameter of the vehicle, wherein the traveling parameter comprises one or more of the traveling speed, an acceleration, and a brake pedal opening.

4. The method according to claim 1 or 3, wherein the determining, based on a traveling parameter, the electric braking torque and the hydraulic braking torque comprises:
controlling a type-B electric regenerative braking system to be turned on, wherein the type-B electric regenerative braking system is located in the vehicle, and the type-B electric regenerative braking system is configured to adjust a distribution ratio of the electric braking torque to the hydraulic braking torque of the vehicle.

5. The method according to any one of claims 1 to 4, wherein before the obtaining a recharge power capability value of a vehicle, the method comprises:
determining that the vehicle is in a non-one-pedal driving mode.

6. The method according to claim 5, wherein the determining that the vehicle is in a non-one-pedal driving mode comprises:

detecting a first input of a user for the vehicle; and
in response to the first input, disabling a one-pedal driving mode of the vehicle.

7. A braking method, wherein the method comprises:

obtaining a recharge power capability value of a vehicle;
determining an electric braking torque of the vehicle as a preset value when the recharge power capability value is less than or equal to a first threshold, and determining a hydraulic braking torque of the vehicle based on a target energy recovery torque and a maximum allowed energy recovery torque of the vehicle, wherein the target energy recovery torque is determined based on a traveling speed and/or an accelerator pedal opening of the vehicle, and the maximum allowed energy recovery torque indicates a maximum value of an energy recovery torque allowed by the vehicle; or
determining, based on a traveling parameter of the vehicle, the electric braking torque and the hydraulic braking torque when the recharge power capability value is greater than a second threshold; and
performing braking based on the electric braking torque and the hydraulic braking torque.

8. The method according to claim 7, wherein the determining an electric braking torque of the vehicle as a preset value when the recharge power capability value is less than or equal to a first threshold comprises:
controlling a type-B electric regenerative braking system to be turned off, wherein the type-B electric regenerative braking system is located in the vehicle, and the type-B electric regenerative braking system is configured to adjust a distribution ratio of the electric braking torque to the hydraulic braking torque of the vehicle.

9. The method according to claim 7, wherein the method further comprises:
obtaining the traveling parameter of the vehicle, wherein the traveling parameter comprises one or more of the traveling speed, an acceleration, and a brake pedal opening.

10. The method according to claim 7 or 9, wherein the determining, based on a traveling parameter, the electric braking torque and the hydraulic braking torque comprises:
controlling a type-B electric regenerative braking system to be turned on, wherein the type-B electric regenerative braking system is located in the vehicle, and the type-B electric regenerative braking system is configured to adjust a distribution ratio of the electric braking torque to the hydraulic braking torque of the vehicle.

11. The method according to any one of claims 7 to 10, wherein before the obtaining a recharge power capability value of a vehicle, the method comprises:
determining that the vehicle is in a non-one-pedal driving mode.

12. The method according to claim 11, wherein the determining that the vehicle is in a non-one-pedal driving mode comprises:

detecting a first input of a user for the vehicle; and
in response to the first input, disabling a one-pedal driving mode of the vehicle.

13. A braking apparatus, wherein the apparatus comprises:

an obtaining unit, configured to obtain a recharge power capability value of a vehicle;
a processing unit, configured to:

determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, wherein the target energy recovery torque is determined based on a traveling speed and/or an accelerator pedal opening of the vehicle, and the maximum allowed energy recovery torque indicates a maximum value of an energy recovery torque allowed by the vehicle; or
determine, based on a traveling parameter of the vehicle, the electric braking torque and the hydraulic braking torque when the recharge power capability value is greater than a second threshold; and
a transceiver unit, configured to send first indication information, wherein the first indication information comprises the hydraulic braking torque, or the first indication information comprises the electric braking torque and the hydraulic braking torque.

14. The apparatus according to claim 13, wherein
the processing unit is specifically configured to control a type-B electric regenerative braking system to be turned off, wherein the type-B electric regenerative braking system is located in the vehicle, and the type-B electric regenerative braking system is configured to adjust a distribution ratio of the electric braking torque to the hydraulic braking torque of the vehicle.

15. The apparatus according to claim 14, wherein
the obtaining unit is further configured to obtain the traveling parameter of the vehicle, wherein the traveling parameter comprises one or more of the traveling speed, an acceleration, and a brake pedal opening.

16. The apparatus according to claim 13 or 15, wherein
the processing unit is specifically configured to control a type-B electric regenerative braking system to be turned on, wherein the type-B electric regenerative braking system is located in the vehicle, and the type-B electric regenerative braking system is configured to adjust a distribution ratio of the electric braking torque to the hydraulic braking torque of the vehicle.

17. The apparatus according to any one of claims 13 to 16, wherein
the processing unit is further configured to determine that the vehicle is in a non-one-pedal driving mode.

18. The apparatus according to claim 17, wherein
the processing unit is specifically configured to:

detect a first input of a user for the vehicle; and
in response to the first input, disable a one-pedal driving mode of the vehicle.

19. A braking apparatus, wherein the apparatus comprises:

an obtaining unit, configured to obtain a recharge power capability value of a vehicle; and
a processing unit, configured to:

determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle, wherein the target energy recovery torque is determined based on a traveling speed and/or an accelerator pedal opening of the vehicle, and the maximum allowed energy recovery torque indicates a maximum value of an energy recovery torque allowed by the vehicle; or

determine, based on a traveling parameter of the vehicle, the electric braking torque and the hydraulic braking torque when the recharge power capability value is greater than a second threshold; and
perform braking based on the electric braking torque and the hydraulic braking torque.

20. The apparatus according to claim 19, wherein
the processing unit is specifically configured to control a type-B electric regenerative braking system to be turned off, wherein the type-B electric regenerative braking system is located in the vehicle, and the type-B electric regenerative braking system is configured to adjust a distribution ratio of the electric braking torque to the hydraulic braking torque of the vehicle.

21. The apparatus according to claim 19, wherein
the obtaining unit is further configured to obtain the traveling parameter of the vehicle, wherein the traveling parameter comprises one or more of the traveling speed, an acceleration, and a brake pedal opening.

22. The apparatus according to claim 19 or 21, wherein
the processing unit is specifically configured to control a type-B electric regenerative braking system to be turned on, wherein the type-B electric regenerative braking system is located in the vehicle, and the type-B electric regenerative braking system is configured to adjust a distribution ratio of the electric braking torque to the hydraulic braking torque of the vehicle.

23. The apparatus according to any one of claims 19 to 22, wherein
the processing unit is further configured to determine that the vehicle is in a non-one-pedal driving mode.

24. The apparatus according to claim 23, wherein
the processing unit is specifically configured to:

detect a first input of a user for the vehicle; and
in response to the first input, disable a one-pedal driving mode of the vehicle.

25. A braking apparatus, comprising a processor and a memory, wherein the processor is coupled to the memory, the memory is configured to store a computer program or instructions, and the processor is configured to execute the computer program or the instructions in the memory, to perform the method according to any one of claims 1 to 6.

26. A braking apparatus, comprising a processor and a memory, wherein the processor is coupled to the memory, the memory is configured to store a computer program or instructions, and the processor is configured to execute the computer program or the instructions in the memory, to perform the method according to any one of claims 7 to 12.

27. A chip, wherein the chip comprises a circuit, and the circuit is configured to perform the method according to any one of claims 1 to 12.

28. A computer-readable storage medium, wherein the computer-readable storage medium stores program code, and when the computer program code is run on a computer, the computer is enabled to perform the method according to any one of claims 1 to 12.

29. A vehicle, comprising the apparatus according to any one of claims 13 to 18, and/or the apparatus according to any one of claims 19 to 24.

30. A braking method, wherein the method comprises:

obtaining a target energy recovery torque and a maximum allowed energy recovery torque of a vehicle, wherein the target energy recovery torque is determined based on a traveling speed and/or an accelerator pedal opening of the vehicle, and the maximum allowed energy recovery torque indicates a maximum value of an energy recovery torque allowed by the vehicle;

determining, based on the target energy recovery torque and the maximum allowed energy recovery torque, a hydraulic braking torque of the vehicle when the maximum allowed energy recovery torque is less than the target energy recovery torque, or

determining, based on a traveling parameter of the vehicle, the electric braking torque and the hydraulic braking torque when the maximum allowed energy recovery torque is greater than or equal to the target energy recovery torque; and

sending first indication information, wherein the first indication information comprises the hydraulic braking torque, or the first indication information comprises the electric braking torque and the hydraulic braking torque.

31. The method according to claim 30, wherein before the determining, based on the target energy recovery torque and the maximum allowed energy recovery torque of the vehicle, a hydraulic braking torque of the vehicle, the method further comprises:

controlling an electric braking capability of a type-B electric regenerative braking system to be disabled, wherein the type-B electric regenerative braking system is located in the vehicle, and the type-B electric regenerative braking system is configured to adjust a distribution ratio of the electric braking torque to the hydraulic braking torque of the vehicle.

32. The method according to claim 30, wherein the method further comprises:

obtaining the traveling parameter of the vehicle, wherein the traveling parameter comprises one or more of the traveling speed, an acceleration, and a brake pedal opening.

33. The method according to claim 30 or 32, wherein the determining, based on a traveling parameter, the electric braking torque and the hydraulic braking torque comprises:

controlling an electric braking capability of a type-B electric regenerative braking system to be enabled, wherein the type-B electric regenerative braking system is located in the vehicle, and the type-B electric regenerative braking system is configured to adjust a distribution ratio of the electric braking torque to the hydraulic braking torque of the vehicle.

34. The method according to any one of claims 30 to 33, wherein before the obtaining a target energy recovery torque and a maximum allowed energy recovery torque of a vehicle, the method further comprises:

determining that the vehicle is in a non-one-pedal driving mode.

35. The method according to claim 34, wherein the determining that the vehicle is in a non-one-pedal driving mode comprises:

detecting a first input of a user for the vehicle; and

in response to the first input, disabling a one-pedal driving mode of the vehicle.

36. A braking method, wherein the method comprises:

obtaining a target energy recovery torque and a maximum allowed energy recovery torque of a vehicle, wherein the target energy recovery torque is determined based on a traveling speed and/or an accelerator pedal opening of the vehicle, and the maximum allowed energy recovery torque indicates a maximum value of an energy recovery torque allowed by the vehicle;

determining, based on the target energy recovery torque and the maximum allowed energy recovery torque, a hydraulic braking torque of the vehicle when the maximum allowed energy recovery torque is less than the target energy recovery torque, or

determining, based on a traveling parameter of the vehicle, the electric braking torque and the hydraulic braking torque when the maximum allowed energy recovery torque is greater than or equal to the target energy recovery torque; and

performing braking based on the electric braking torque and the hydraulic braking torque.

37. The method according to claim 36, wherein before the determining, based on the target energy recovery torque and the maximum allowed energy recovery torque of the vehicle, a hydraulic braking torque of the vehicle, the method further comprises:

controlling an electric braking capability of a type-B electric regenerative braking system to be disabled, wherein the type-B electric regenerative braking system is located in the vehicle, and the type-B electric regenerative braking system is configured to adjust a distribution ratio of the electric braking torque to the hydraulic braking torque of the vehicle.

38. The method according to claim 36, wherein the method further comprises:
    obtaining the traveling parameter of the vehicle, wherein the traveling parameter comprises one or more of the traveling speed, an acceleration, and a brake pedal opening.

39. The method according to claim 36 or 38, wherein the determining, based on a traveling parameter, the electric braking torque and the hydraulic braking torque comprises:
    controlling an electric braking capability of a type-B electric regenerative braking system to be enabled, wherein the type-B electric regenerative braking system is located in the vehicle, and the type-B electric regenerative braking system is configured to adjust a distribution ratio of the electric braking torque to the hydraulic braking torque of the vehicle.

40. The method according to any one of claims 36 to 39, wherein before the obtaining a target energy recovery torque and a maximum allowed energy recovery torque of a vehicle, the method further comprises:
    determining that the vehicle is in a non-one-pedal driving mode.

41. The method according to claim 40, wherein the determining that the vehicle is in a non-one-pedal driving mode comprises:

    detecting a first input of a user for the vehicle; and
    in response to the first input, disabling a one-pedal driving mode of the vehicle.

42. A braking apparatus, wherein the apparatus comprises:

    an obtaining unit, configured to obtain a target energy recovery torque and a maximum allowed energy recovery torque of a vehicle, wherein the target energy recovery torque is determined based on a traveling speed and/or an accelerator pedal opening of the vehicle, and the maximum allowed energy recovery torque indicates a maximum value of an energy recovery torque allowed by the vehicle;
    a processing unit, configured to:

        determine, based on the target energy recovery torque and the maximum allowed energy recovery torque, a hydraulic braking torque of the vehicle when the maximum allowed energy recovery torque is less than the target energy recovery torque, or
        determine, based on a traveling parameter of the vehicle, the electric braking torque and the hydraulic braking torque when the maximum allowed energy recovery torque is greater than or equal to the target energy recovery torque; and
        a transceiver unit, configured to send first indication information, wherein the first indication information comprises the hydraulic braking torque, or the first indication information comprises the electric braking torque and the hydraulic braking torque.

43. The apparatus according to claim 42, wherein
    the processing unit is further configured to control an electric braking capability of a type-B electric regenerative braking system to be disabled, wherein the type-B electric regenerative braking system is located in the vehicle, and the type-B electric regenerative braking system is configured to adjust a distribution ratio of the electric braking torque to the hydraulic braking torque of the vehicle.

44. The apparatus according to claim 42, wherein
    the obtaining unit is further configured to obtain the traveling parameter of the vehicle, wherein the traveling parameter comprises one or more of the traveling speed, an acceleration, and a brake pedal opening.

45. The apparatus according to claim 42 or 44, wherein
    the processing unit is specifically configured to control an electric braking capability of a type-B electric regenerative braking system to be enabled, wherein the type-B electric regenerative braking system is located in the vehicle, and the type-B electric regenerative braking system is configured to adjust a distribution ratio of the electric braking torque to the hydraulic braking torque of the vehicle.

46. The apparatus according to any one of claims 42 to 45, wherein
the processing unit is further configured to determine that the vehicle is in a non-one-pedal driving mode.

47. The apparatus according to claim 46, wherein
the processing unit is specifically configured to:

detect a first input of a user for the vehicle; and
in response to the first input, disable a one-pedal driving mode of the vehicle.

48. A braking apparatus, wherein the apparatus comprises:

an obtaining unit, configured to obtain a target energy recovery torque and a maximum allowed energy recovery torque of a vehicle, wherein the target energy recovery torque is determined based on a traveling speed and/or an accelerator pedal opening of the vehicle, and the maximum allowed energy recovery torque indicates a maximum value of an energy recovery torque allowed by the vehicle; and
a processing unit, configured to:

determine, based on the target energy recovery torque and the maximum allowed energy recovery torque, a hydraulic braking torque of the vehicle when the maximum allowed energy recovery torque is less than the target energy recovery torque, or
determine, based on a traveling parameter of the vehicle, the electric braking torque and the hydraulic braking torque when the maximum allowed energy recovery torque is greater than or equal to the target energy recovery torque; and
perform braking based on the electric braking torque and the hydraulic braking torque.

49. The apparatus according to claim 48, wherein
the processing unit is further configured to control an electric braking capability of a type-B electric regenerative braking system to be enabled, wherein the type-B electric regenerative braking system is located in the vehicle, and the type-B electric regenerative braking system is configured to adjust a distribution ratio of the electric braking torque to the hydraulic braking torque of the vehicle.

50. The apparatus according to claim 48, wherein
the obtaining unit is further configured to obtain the traveling parameter of the vehicle, wherein the traveling parameter comprises one or more of the traveling speed, an acceleration, and a brake pedal opening.

51. The apparatus according to claim 48 or 50, wherein
the processing unit is specifically configured to control an electric braking capability of a type-B electric regenerative braking system to be enabled, wherein the type-B electric regenerative braking system is located in the vehicle, and the type-B electric regenerative braking system is configured to adjust a distribution ratio of the electric braking torque to the hydraulic braking torque of the vehicle.

52. The apparatus according to any one of claims 48 to 51, wherein
the processing unit is further configured to determine that the vehicle is in a non-one-pedal driving mode.

53. The apparatus according to claim 52, wherein
the processing unit is specifically configured to:

detect a first input of a user for the vehicle; and
in response to the first input, disable a one-pedal driving mode of the vehicle.

54. A braking apparatus, comprising a processor and a memory, wherein the processor is coupled to the memory, the memory is configured to store a computer program or instructions, and the processor is configured to execute the computer program or the instructions in the memory, to perform the method according to any one of claims 30 to 35.

55. A braking apparatus, comprising a processor and a memory, wherein the processor is coupled to the memory, the memory is configured to store a computer program or instructions, and the processor is configured to execute the computer program or the instructions in the memory, to perform the method according to any one of claims 36 to 41.

**56.** A chip, wherein the chip comprises a circuit, and the circuit is configured to perform the method according to any one of claims 30 to 41.

**57.** A computer-readable storage medium, wherein the computer-readable storage medium stores program code, and when the computer program code is run on a computer, the computer is enabled to perform the method according to any one of claims 30 to 41.

**58.** A vehicle, comprising the apparatus according to any one of claims 42 to 47, and/or the apparatus according to any one of claims 48 to 55.

FIG. 1

FIG. 2

FIG. 3

FIG. 4

500

S501: Obtain a recharge power capability value of a vehicle

S502: Determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle; or determine, based on a traveling parameter of the vehicle, the electric braking torque and the hydraulic braking torque when the recharge power capability value is greater than a second threshold

S503: Send first indication information

FIG. 5

600

S601: Obtain a recharge power capability value of a vehicle

S602: Determine an electric braking torque of the vehicle as a preset value when the recharge power capability value is less than or equal to a first threshold, and determine a hydraulic braking torque of the vehicle based on a target energy recovery torque and a maximum allowed energy recovery torque of the vehicle; or determine, based on a traveling parameter of the vehicle, the electric braking torque and the hydraulic braking torque when the recharge power capability value is greater than a second threshold

S603: Perform braking based on the electric braking torque and the hydraulic braking torque

FIG. 6

FIG. 7A

CONT.
FROM
FIG. 7A

A VCU/VDC sends a hydraulic braking compensation request to a chassis — 715

The chassis replies with a hydraulic torque — 716

The vehicle is driven, a cell temperature rises or a SoC decreases, and the recharge power capability value is recovered — 717

Determine whether the recharge power value is greater than a second threshold — 718

No

Yes

Exit the non-one-pedal driving hydraulic braking compensation strategy, and recover the braking energy recovery capability value of the type-B electric regenerative braking system — 719

FIG. 7B

Detect that a vehicle is started — 801

Determine whether a recharge power capability value is less than or equal to a first threshold — 802

No

Yes

Enable a non-one-pedal driving hydraulic braking compensation strategy, and control a braking energy recovery capability value of a type-B electric regenerative braking system to be 0 — 803

A VCU/VDC sends a hydraulic braking compensation request to a chassis — 804

The chassis replies with a hydraulic torque requested by the VCU/VDC — 805

The vehicle is driven, a cell temperature rises or a SoC decreases, and the recharge power capability value is recovered — 806

Determine whether the recharge power value is greater than a second threshold — 807

No

Yes

Exit the non-one-pedal driving hydraulic braking compensation strategy, and recover the braking energy recovery capability value of the type-B electric regenerative braking system — 808

FIG. 8

FIG. 9(a)-1

TO
FIG. 9(a)-2

901

09:00

902 903 904

900

905

Search for nearby locations

9051
Home

9052
Company

906
Applications

907
Singer: xxx

**A xxxxxxx B**

908
80%   260 km

909
360° surround view

910

911   912   913   914   915   916   917

25°C   24.5°C

FIG. 9(a)-2

EP 4 707 036 A1

44

906

9061

App 1 | App 2 | App 3

App 4 | App 5 | Settings

● ○ ○

FIG. 9(b)

Settings ...

Date and time ❯

Security ❯

Language and input ❯

Add accounts ❯

Driving mode —— 9062 ❯

FIG. 9(c)

Driving mode · · ·

One-pedal driving mode ———— 9063 >

Two-pedal driving mode ———— 9064 >

Automatic driving mode ———— 9065

FIG. 9(d)

Two-pedal driving mode · · ·

9066

Two-pedal driving mode ⬤

After the two-pedal driving mode is enabled, 9067
you can control the vehicle to accelerate or ————
brake via the accelerator pedal or the brake
pedal. The vehicle can determine, based on a
relationship between a recharge power
capability value and a first threshold,
whether to turn on or off the type-B electric
regenerative control system

FIG. 9(e)

Apparatus 1000

Obtaining unit 1010

Transceiver unit 1020

Processing unit 1030

FIG. 10

Apparatus 1100

Memory 1110

Processor 1120

Communication
interface 1130

FIG. 11

1200

S1201: Obtain a target energy recovery torque and a maximum allowed energy recovery torque of a vehicle

S1202: Determine, based on the target energy recovery torque and the maximum allowed energy recovery torque of the vehicle, a hydraulic braking torque of the vehicle when the maximum allowed energy recovery torque is less than the target energy recovery torque; or determine, based on a traveling parameter of the vehicle, an electric braking torque and the hydraulic braking torque when the maximum allowed energy recovery torque is greater than or equal to the target energy recovery torque

S1203: Send first indication information

FIG. 12

1300

S1301: Obtain a target energy recovery torque and a maximum allowed energy recovery torque

S1302: Determine, based on the target energy recovery torque and the maximum allowed energy recovery torque of a vehicle, a hydraulic braking torque of the vehicle when the maximum allowed energy recovery torque is less than the target energy recovery torque; or determine, based on a traveling parameter of the vehicle, an electric braking torque and the hydraulic braking torque when the maximum allowed energy recovery torque is greater than or equal to the target energy recovery torque

S1303: Perform braking based on the electric braking torque and the hydraulic braking torque

FIG. 13

FIG. 14

FIG. 15

## INTERNATIONAL SEARCH REPORT

| International application No. |
|---|
| **PCT/CN2024/090532** |

### A. CLASSIFICATION OF SUBJECT MATTER

B60L 7/26(2006.01)i; B60L 7/10(2006.01)i

According to International Patent Classification (IPC) or to both national classification and IPC

### B. FIELDS SEARCHED

Minimum documentation searched (classification system followed by classification symbols)

IPC:B60L, B60T

Documentation searched other than minimum documentation to the extent that such documents are included in the fields searched

Electronic data base consulted during the international search (name of data base and, where practicable, search terms used)

CNKI, CNABS, VEN: 制动, 刹车, 驻车, 再生, 回收, 充电, 回充, 扭矩, brak+, park+, regenerat+, recycl+, charg+, torque

### C. DOCUMENTS CONSIDERED TO BE RELEVANT

| Category* | Citation of document, with indication, where appropriate, of the relevant passages | Relevant to claim No. |
|---|---|---|
| X | CN 112659909 A (ZHEJIANG HOZON NEW ENERGY AUTOMOBILE CO., LTD.) 16 April 2021 (2021-04-16)<br>description, specific embodiments, and figures 1-3 | 1-58 |
| A | CN 111942356 A (NINGBO GEELY AUTOMOBILE RESEARCH & DEVELOPMENT CO., LTD. et al.) 17 November 2020 (2020-11-17)<br>entire document | 1-58 |
| A | CN 107253452 A (BEIJING ELECTRIC VEHICLE CO., LTD.) 17 October 2017 (2017-10-17)<br>entire document | 1-58 |
| A | CN 114475263 A (XUZHOU XUGONG AUTOMOBILE MANUFACTURING CO., LTD.) 13 May 2022 (2022-05-13)<br>entire document | 1-58 |
| A | US 2021122248 A1 (HYUNDAI MOTOR CO., LTD. et al.) 29 April 2021 (2021-04-29)<br>entire document | 1-58 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2024** | **17 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/090532**

| Patent document cited in search report | | | Publication date (day/month/year) | Patent family member(s) | | | Publication date (day/month/year) |
|---|---|---|---|---|---|---|---|
| CN | 112659909 | A | 16 April 2021 | None | | | |
| CN | 111942356 | A | 17 November 2020 | None | | | |
| CN | 107253452 | A | 17 October 2017 | None | | | |
| CN | 114475263 | A | 13 May 2022 | None | | | |
| US | 2021122248 | A1 | 29 April 2021 | KR | 20210052605 | A | 11 May 2021 |
| | | | | US | 11505072 | B2 | 22 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310786830